(19) Europäisches Patentamt
European Patent Office
Office européen des brevets

(11) EP 2 487 537 A1

(12) EUROPEAN PATENT APPLICATION
published in accordance with Art. 153(4) EPC

(43) Date of publication:
**15.08.2012 Bulletin 2012/33**

(21) Application number: **10821780.3**

(22) Date of filing: **17.06.2010**

(51) Int Cl.:
***G02F 1/1337*** (2006.01) ***C08G 59/42*** (2006.01)
***C08G 73/10*** (2006.01)

(86) International application number:
**PCT/JP2010/060303**

(87) International publication number:
**WO 2011/043109 (14.04.2011 Gazette 2011/15)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.10.2009 JP 2009235727**

(71) Applicant: **Sharp Kabushiki Kaisha**
**Osaka-shi, Osaka 545-8522 (JP)**

(72) Inventors:
- **MIZUSAKI, Masanobu**
  **Osaka-shi, Osaka 545-8522 (JP)**
- **NAKANISHI, Youhei**
  **Osaka-shi, Osaka 545-8522 (JP)**
- **KATAYAMA, Takashi**
  **Osaka-shi, Osaka 545-8522 (JP)**
- **NOMA, Takeshi**
  **Osaka-shi, Osaka 545-8522 (JP)**

(74) Representative: **Müller - Hoffmann & Partner**
**Patentanwälte**
**Innere Wiener Strasse 17**
**81667 München (DE)**

# (54) LIQUID CRYSTAL DISPLAY DEVICE AND METHOD FOR MANUFACTURING SAME

(57) The present invention provides a liquid crystal display device capable of preventing image sticking on a display caused by a residual DC voltage in various display modes, and a method for manufacturing thereof. The liquid crystal display device of the present invention includes a pair of substrates, a liquid crystal layer provided between the substrates, and an alignment film provided between the liquid crystal layer and at least one of the substrates, wherein the alignment film is formed by reacting an epoxy compound with a carboxyl group of one of a polyamic acid and a polyimide having a degree of imidization of less than 100%.

Fig. 3

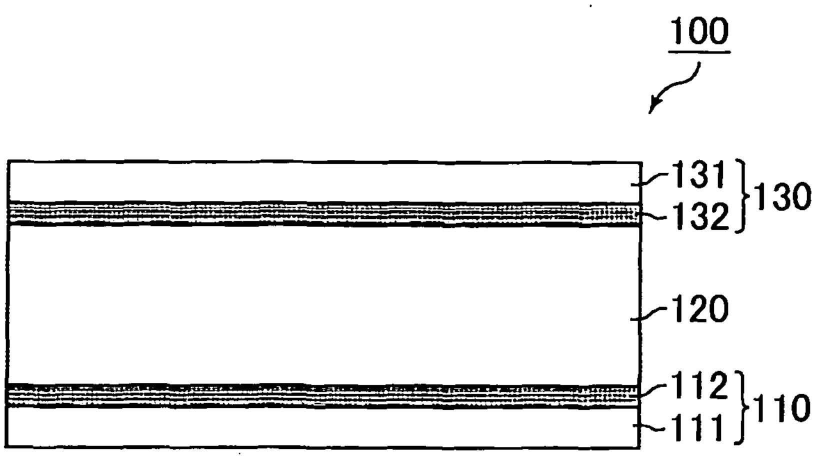


EP 2 487 537 A1

## Description

TECHNICAL FIELD

The present invention relates to a liquid crystal display device, and a method for manufacturing thereof. More specifically, the present invention relates to a liquid crystal display device having an alignment film for controlling the alignment of liquid crystal molecules, and a method for manufacturing thereof.

BACKGROUND ART

Liquid crystal display devices have been used in various fields, taking advantage of the features of thin, light, and low power consumption. Known display modes of liquid crystal display devices are Twisted Nematic (TN) mode, Super Twisted Nematic (STN) mode, Vertical Alignment (VA) mode, In-plane Switching (IPS) mode, and the like. VA-mode, in particular, is excellent in display property due to its high contrast ratio that cannot be achieved by TN-mode and STN-mode.

Liquid crystal display devices are excellent in various properties as mentioned earlier. However, the voltage holding ratio of Liquid crystal display devices tends to decrease, and image sticking on the display tends to occur. One of the causes of image sticking may be a residual DC voltage generated in a production process of a liquid crystal cell (liquid crystal display panel) included in a liquid crystal display device.

A liquid crystal cell has a structure in which a liquid crystal layer is provided between a pair of substrates, and alignment films for controlling the alignment of a liquid crystal are formed at respective boundaries between the liquid crystal layer and the substrates. In manufacturing the liquid crystal cell, a material of the alignment film is applied to a surface of each of the substrate. After being allowed to stand for a predetermined time, the substrates are attached to each other, and a liquid crystal is injected so that a liquid crystal layer is formed. In a TN-mode or VA-mode liquid crystal display device, a polyamic acid-based material is sometimes used as an alignment film material. In such a case, a large amount of carboxyl groups exist in the alignment film while the substrates having the alignment film material applied thereto are allowed to stand as mentioned above. Due to the carboxyl groups, a residual DC voltage occurs as mentioned later.

As a technique to resolve the problem of image sticking due to a residual DC voltage (rDC), Patent Document 1 discloses a liquid crystal aligning agent, for which polyamic acid is used as one of raw materials, including a polymer having an imide structure, an epoxy-based compound, and a curing agent for the epoxy-based compound. Patent Document 2 discloses an alignment film in which the ratio of imide coupling units and the polar term in the surface tension are controlled. According to these techniques, a polymer is imidized and also an epoxy-based compound is reacted with polyamic acid at a stage of the alignment film material. As a result, residual carboxyl groups in the alignment film are reduced, and thereby image sticking due to a residual DC voltage (rDC) can be suppressed.

Patent Document 1: JP 10-338880 A
Patent Document 2: JP 2001-228481 A

DISCLOSURE OF INVENTION

The techniques disclosed in Patent Documents 1 and 2, however, each relate to a horizontal alignment film for horizontally aligning a liquid crystal. Therefore, the techniques can be applied to liquid crystal display devices of TN-mode, STN-mode, IPS-mode or the like, but cannot be applied to liquid crystal display devices having a vertical alignment film for vertically aligning a liquid crystal such as VA-mode liquid crystal display devices.

Specifically, the techniques of Patent Documents 1 and 2 include imidizing a polymer contained in an alignment film material for a horizontal alignment film, and also reacting a polycarboxylic acid compound with a curing agent to reduce residual carboxyl groups in the alignment film. In other words, the techniques do not control the alignment (tilt angle) of the liquid crystal by making use of a side chain portion of the polymer.

Meanwhile, an alignment film material for forming a vertical alignment film includes a polymer having a vertically aligning functional group in a side chain portion, and the side chain portion controls the alignment (tilt angle) of a liquid crystal. Since the aforementioned imidization leads to reduction in the vertically aligning functional group or the like, the technique cannot be employed in some cases. Moreover, in liquid crystal display devices including a vertical aligning film, the imidization degree is lowered to enhance the flexibility of the polymer so that the vertical alignment property of the liquid crystal is maintained.

VA-mode liquid crystal display devices, which are excellent in display property, are further required to be able to avoid image sticking on the display. In particular, 4D-RTN (4 Domain-Reverse Twisted Nematic) mode, a kind of VA-mode, liquid crystal display devices have a high response speed, high light transparency, can achieve high contrast ratio, and have thus been increasingly demanded.

The present invention has been created in view of the above problems and aims to provide a liquid crystal display device capable of preventing image sticking on the display due to a residual DC voltage in various kinds of display modes, and a method for manufacturing the liquid crystal display device.

MEANS FOR SOLVING THE PROBLEMS

After various studies on image sticking occurring in liquid crystal display devices, the present inventors first found that a residual DC voltage causes image sticking on a display and that the residual DC voltage is generated by carboxyl groups contained in an alignment film formed on substrates before they are attached to each other. Then, the present inventors have found the following: by using an alignment film material including an epoxy compound and one of a polyamic acid or a polyimide having a degree of imidization of less than 100%, and also by avoiding positive imidization of the alignment film material at an alignment film material stage, namely, a stage before attaching substrates having the alignment film material applied thereon, the alignment film material can be prevented from losing its alignment property even if the alignment film material contains a polymer having in a side chain portion thereof a functional group which controls the alignment of the liquid crystal. Further, introduction of the epoxy compound reduces the concentration of the carboxyl groups in the alignment film, which leads to decrease in the residual DC voltage. As a result, incidence of image sticking on the display can be reduced.

Namely, the present invention is a liquid crystal display device including a pair of substrates, a liquid crystal layer provided between the substrates, and an alignment film provided between the liquid crystal layer and at least one of the substrates, wherein the alignment film is formed by reacting an epoxy compound with a carboxyl group of one of a polyamic acid and a polyimide having a degree of imidization of less than 100%.

The liquid crystal display device of the present invention displays images by changing voltages applied to the liquid crystal layer and thereby changing the retardation of the liquid crystal layer. The display mode is not particularly limited, and applicable examples thereof include various types of modes such as TN-mode, STN-mode, VA-mode, and IPS-mode. Further, the present invention can be applied to a liquid crystal display device of, for example, 4D-RTN mode in which the liquid crystal is aligned in a plurality of directions such that the pixel is separated into a plurality of domains.

Examples of the polyamic acid of the present invention include those represented by the following formulae (3-1) and (3-2).

[Chem. 1]

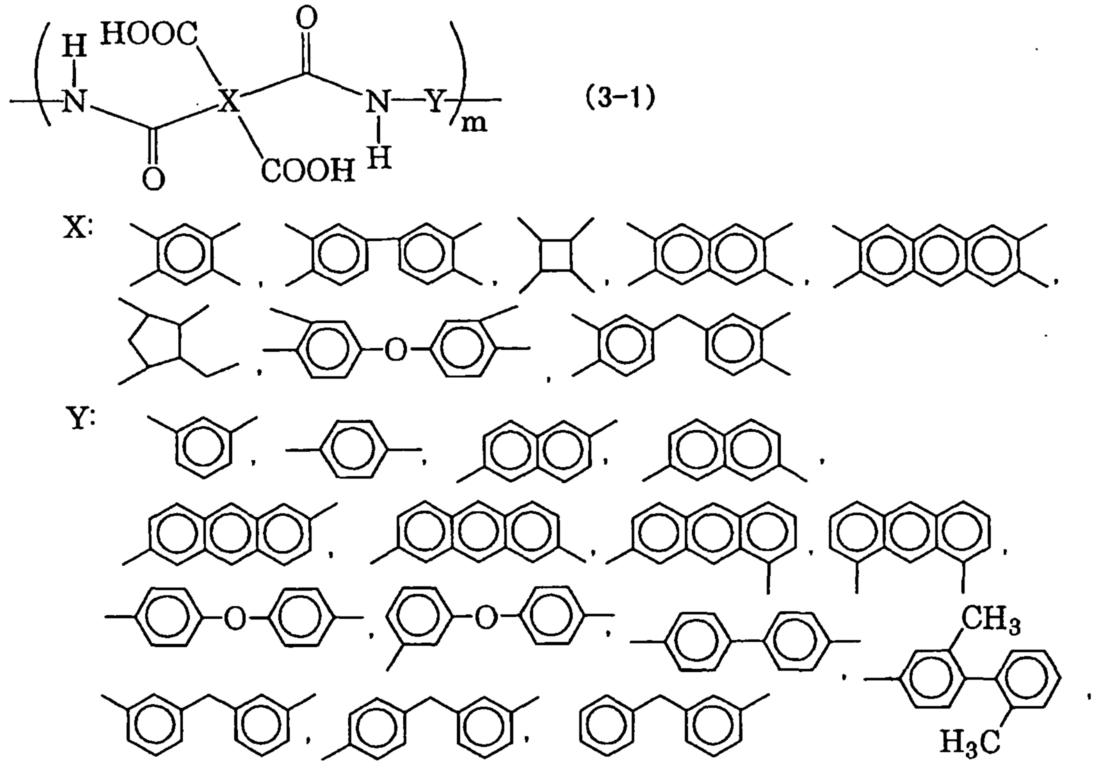

(3-1)

[Chem. 2]

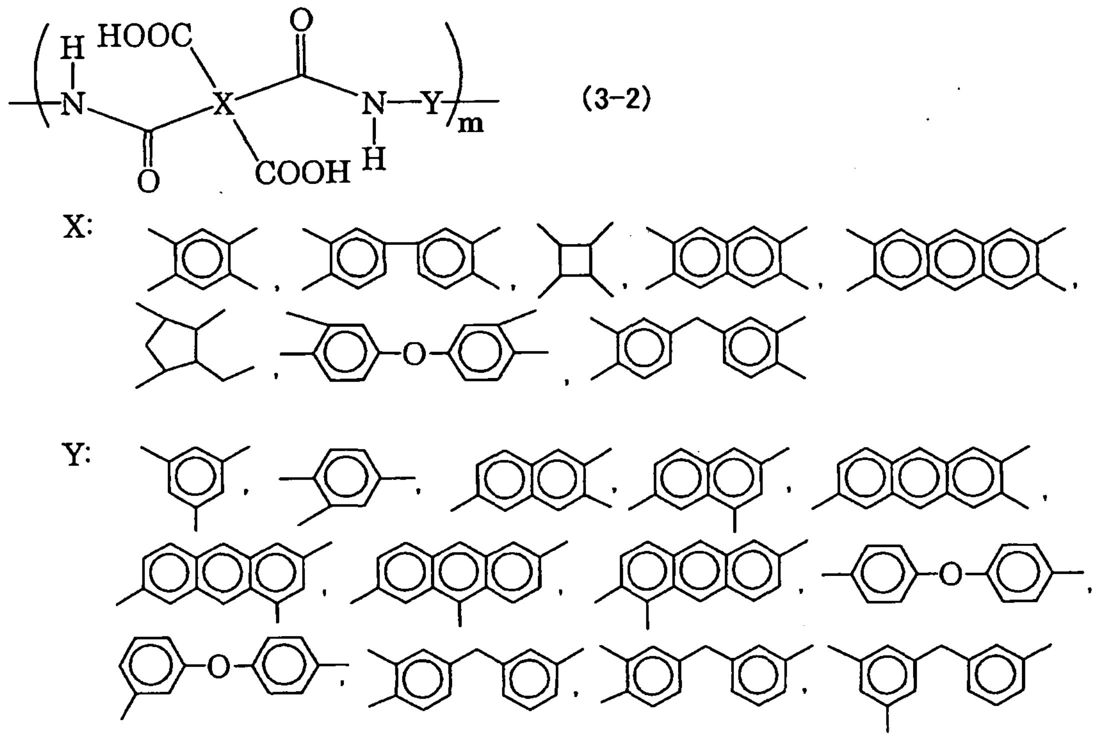

(3-2)

The degree of imidization of less than 100% is a value before forming the alignment film, namely, before the

substrates are attached to each other.

The epoxy compound is used to suppress image sticking on the display due to a residual DC voltage. Preferable examples of the epoxy compound include a mono-functional, di-functional, or tri-functional epoxy compound.

Examples of the mono-functional epoxy compound include (3-glycidyl oxypropyl)trimethoxysilane, 1,2-epoxy-3-phenoxypropane, glycidyl 1,1,2,2-tetrafluoroethyl ether, glycidyl 2,2,3,3-tetrafluoropropyl ether, glycidyl hexadecyl ether, glycidyl 4-nonylphenyl ether, glycidyl 4-methoxyphenyl ether, glycidyl methacrylate, glycidyl isopropylether, glycidyl isobutyl ether, furfuryl glycidyl ether, butyl glycidyl ether, allyl glycidyl ether, glycidyl 2,2,3,3,4,4,5,5-octafluoropentyl ether, and phenyl glycidyl ether, as shown in the following formulae (4-1) to (4-15).

[Chem. 3]

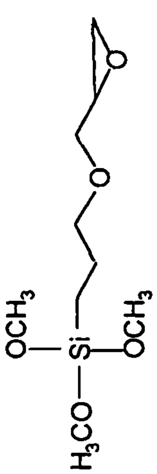

(4-1)

(3-Glycidyloxypropyl)trimethoxysilane

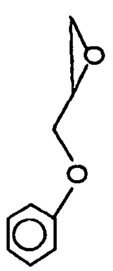

(4-2)

1,2-Epoxy-3-phenoxypropane

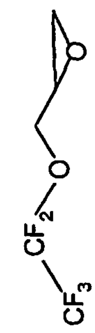

(4-3)

Glycidyl1,1,2,2-tetrafluoroethylether

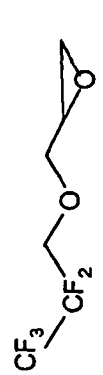

(4-4)

Glycidyl2,2,3,3-tetrafluoropropylether

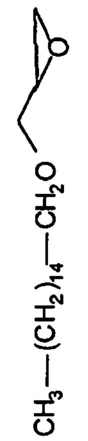

(4-5)

Glycidyl hexadecyl ether

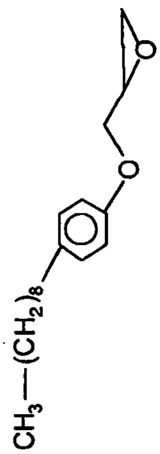

(4-6)

Glycidyl 4-nonylphenyl ether

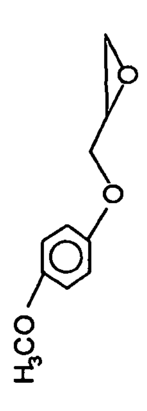

(4-7)

Glycidyl 4-methoxyphenyl ether

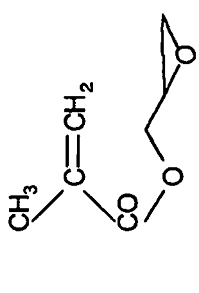

(4-8)

Glycidyl methacrylate

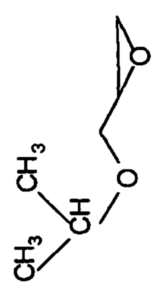

(4-9)

Glycidyl isopropyl ether

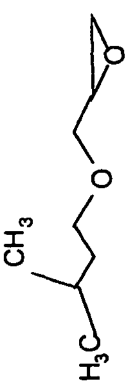

(4-10)

Glycidyl isobutyl ether

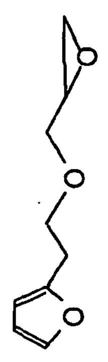

(4-11)

Furfuryl glycidylether

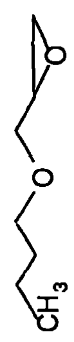

(4-12)

Butyl glycidyl ether

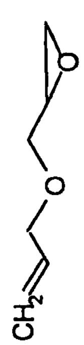

(4-13)

Allyl glycidyl ether

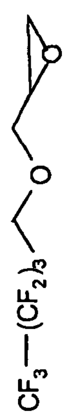

(4-14)

Glycidyl 2,2,3,3,4,4,5,5-octafluoropentyl ether

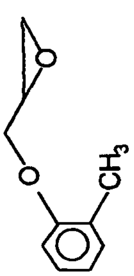

(4-15)

Phenyl glycidyl ether

Examples of the di-functional epoxy compound include bisphenol A diglycidyl ether, diethylene glycol diglycidyl ether, diglycidyl 1,2-cyclohexane dicarboxylate, neopenthyl glycol diglycidyl ether, resorcinol diglycidyl ether, 1, 4-butanediol diglycidyl ether, 1,4-cyclohexanedimethanol diglycidyl ether, ethylene glycol diglycidyl ether, glycerol diglycidyl

ether, bis[4-(glycidyl oxy)phenyl]methane, and bisphenol A propoxylate diglycidyl ether, as shown in the following formulae (5-1) to (5-11).

[Chem. 4]

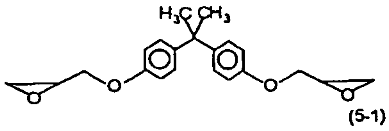
(5-1)
Bisphenol A diglycidyl ether

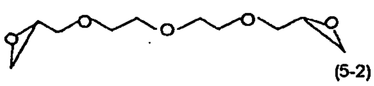
(5-2)
Diethylene glycol diglycidyl ether

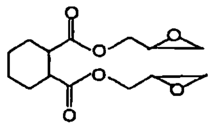
(5-3)
Diglycidyl 1,2-cyclohexane dicarboxylate

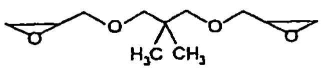
(5-4)
Neopentyl glycol diglycidyl ether

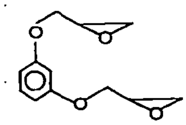
(5-5)
Resorcinol diglycidyl ether

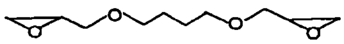
(5-6)
1, 4−Butanediol diglycidyl ether

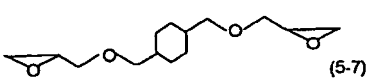
(5-7)
1, 4−Cyclohexanedimethanol diglycidyl ether

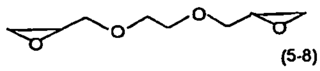
(5-8)
Ethylene glycol diglycidyl ether

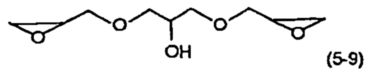
(5-9)
Glycerol diglycidyl ether

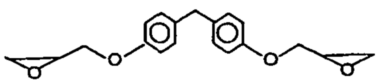
(5-10)
Bis[4-(glycidyloxy)phenyl]methane

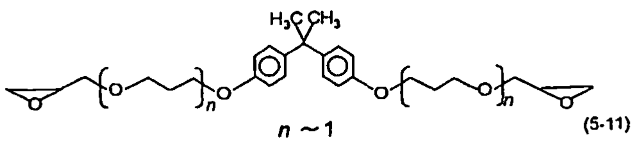
$n \sim 1$
(5-11)
Bisphenol A propoxylate diglycidyl ether

Examples of the tri-functional epoxy compound include N,N-diglycidyl-4-glycidyloxyaniline, tris(2,3-epoxypropyl)isocyanurate, trimethylolpropane triglycidyl ether, and tris(4-hydroxyphenyl)methane triglycidyl ether 2,6-tolylene diisocyanate adduct, as shown in the following formulae (6-1) to (6-4).

[Chem. 5]

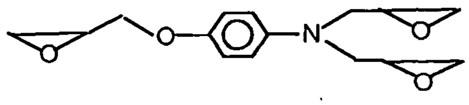

(6-1)

*N,N*-Diglycidyl-4-glycidyloxyaniline

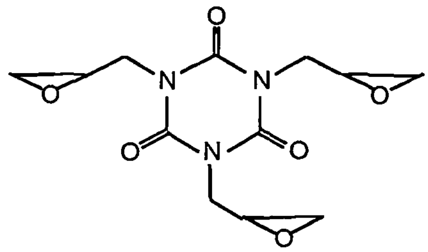

(6-2)

Tris(2,3-epoxypropyl)isocyanurate

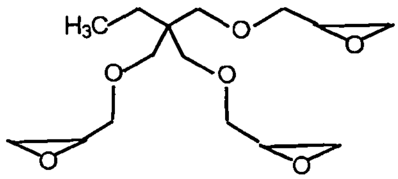

(6-3)

Trimethylolpropane triglycidyl ether

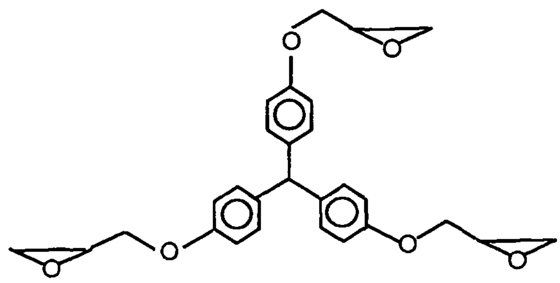

(6-4)

Tris(4-hydroxyphenyl)methane triglycidyl ether 2,6-tolylene diisocyanate adduct

Generation of a residual DC voltage in a liquid crystal display device is explained hereinbelow. The following formula (7) shows one example of a polyamic acid-based alignment film material.

[Chem. 6]

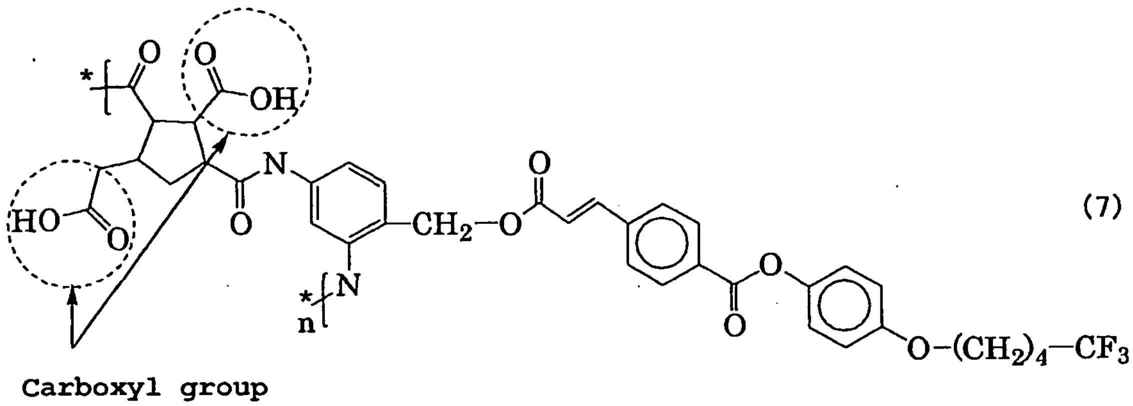


(7)

If a substrate to which the polyamic acid-based alignment film material having the above structure has been applied is allowed to stand in production of a liquid crystal cell, the alignment film absorbs moisture in the atmosphere or polar solvents suchasN-methylpyrrolidone (NMP) evaporated by baking. The following formula (8) shows a structure of NMP.

[Chem. 7]

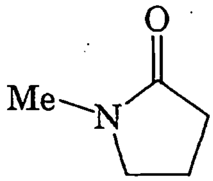

(8)

The moisture or NMP is selectively adsorbed to residual carboxyl groups in the alignment film to form hydrogen bonds as shown in the following formulae (9) and (10). The hydrogen bond energy upon bonding of a carboxyl group to oxygen contained in NMP is about 21 kJ/mol. The hydrogen bond energy upon bonding of a carboxyl group to nitrogen is about 29 kJ/mol. The hydrogen bond energy upon bonding of a carboxyl group to water is about 21 kJ/mol.

[Chem. 8]

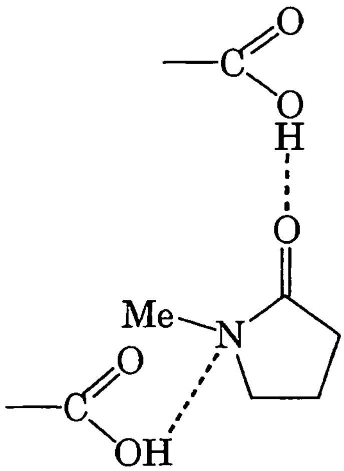

(9)

[Chem. 9]

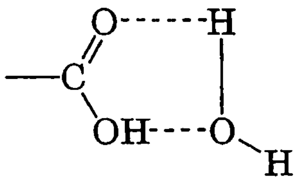

(10)

After the substrates are attached to each other, and then a liquid crystal layer is formed, the polar solvent selectively adsorbed to the carboxyl groups allows ionic impurities in the liquid crystal layer to stably exist in the ionic state. As a result, a residual DC voltage occurs. Moreover, if only one of the substrates is left to stand for a long time period, ionic impurities are selectively adsorbed to the one substrate. As a result, a residual DC voltage may occur even if a square-wave voltage, not including direct current offset, is applied from outside the liquid crystal cell.

As mentioned earlier, if a large amount of carboxyl groups remain in the alignment film, the ionic impurities in the liquid crystal tend to be bonded to the carboxyl groups in the alignment film at a boundary to the liquid crystal layer. The residual DC voltage caused by the ionic impurities bonded to the boundary face of the alignment film is obtained by the following equation (1). The equation (1) shows that generation of the residual DC voltage is determined based on the rate constant of adsorption (An) of the ionic impurities in the liquid crystal layer to the boundary face and the

dissociation rate constant (B) from the boundary face.
[Math. 1]

$$V_{rDC}(t) = V_{DC} \frac{An}{An + B} [1 - \exp\{-(An + B)t\}] \qquad (1)$$

***A***: **Adsorption rate constant of ona place of impurities (ion) in liquid crystal layer to boundary face**
***n***: **Concentration of ionic impurities in liquid crystal layer**
***B*** **Dissociation rate constant of impurities accumulated on boundary face**
***t*** **: DC voltage application time**

Further, by applying the Arrhenius law, the activation energy of the dissociation of the ionic impurities is obtained based on the following equation (2), and the activation energy of the adsorption of the ionic impurities is obtained based on the following equation (3).
[Math. 2]

$$\ln(B) = C - \frac{\Delta E}{kT} \qquad (2)$$

**$\Delta E$: Activation energy of adsorption and dissociation**
***k*** **: Boltzmann constant**
***T*** **: Absolute temperature**
***C*** **:Frequency factor (constant)**

[Math. 3]

$$\ln(An) = C - \frac{\Delta E}{kT} \qquad (3)$$

Fig. 1 is a graph showing a relationship between a DC offset application time (min) and a residual DC voltage (V) in a liquid crystal display device. Analysis of the measurement results shown in Fig. 1 based on the above equation (1) can give the rate constant of adsorption to the boundary face (An) and the rate constant of dissociation from the boundary face (B). Fig. 2 is a graph showing a relationship between logarithm natural (In (Rate Constant)) of the adsorption rate constant (An) or the dissociation rate constant (B) and the reciprocal of the absolute temperature (1000/T). According to the fact that 1 ev is $1.62 \times 10^{-19}$ J, as well as the plot based on Arrhenius equation shown in Fig. 2 and the above equation (2), the activation energy of the dissociation of the ionic impurities is 0.208 ev as shown in the following equation (4). Similarly, the activation energy of the adsorption of the ionic impurities is 0.340 ev.

$$[(1.38\times10^{-23})/(1.62\times10^{-19})] \times 2443.2 = 0.208 \text{ ev} \qquad (4)$$

The results show that the ionic impurities (or solvent adsorbing ions) are physically adsorbed to the boundary face of the alignment by Van Der Waals' force, hydrogen bond, or the like, not by electrostatic attractive force.
In the alignment film having a structure represented by the formula (7), sites where intermolecular forces such as van der Waals' force and a hydrogen bond can occur are mainly the three sites of the carboxyl groups, the terminal fluorine group, and the ester bond. The intermolecular force between the terminal fluorine group or the ester bond and

a counterpart does not occur unless the counterpart , namely impurities in the liquid crystal layer or impurities attached during storage, includes a proton (H). In contrast, the intermolecular force between the carboxyl groups and a counterpart occurs when the counterpart includes O, N. Meanwhile, a side chain has been introduced through the ester bond in the vertical alignment film. Therefore, in the present invention, by reducing the carboxyl groups in the alignment film, the bonding with ionic impurities can be prevented. As a result, occurrence of the residual DC voltage can be avoided. In the present invention, the lower the residual DC voltage, the better. The residual DC voltage is more preferably not more than 50 mV for 2V direct current voltage application. The residual DC voltage of not more than 50 mV can favorably remedy image sticking on the display.

The configuration of the liquid crystal display device of the present application is not especially limited by other components as long as it essentially includes such components.

In the liquid crystal display device of the present invention, the alignment film preferably includes a structural unit represented by the following formula (1).

[Chem. 10]

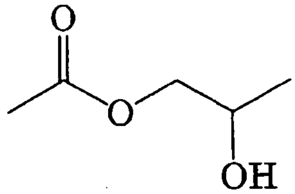

(1)

The bond represented by the formula (1) is a bond formed by a reaction between an expoxy compound and a carboxyl group of one of a polyamic acid and a polyimide having a degree of imidization of less than 100%. Formation of such a bond can reduce the residual carboxyl groups in the alignment film, leading to reduction of the residual DC voltage. As a result, image sticking on the display can be avoided. Meanwhile, even in the case of an alignment film material for a vertical alignment film which includes a polymer material having a vertically aligning functional group in its side chain portion, the vertical aligning property can be stably maintained without changing the rigidity of the main-chain of the polymer depending on the reacting between the polyimide and the epoxy compound.

The residual DC voltage can be reduced by introducing an epoxy compound as mentioned earlier. However, introduction of an excessive amount of the epoxy compoundmay lead to insufficient liquid crystal alignment control by one of the polyamic acid and polyimide, potentially deteriorating the alignment property of the liquid crystal. Therefore, in the liquid crystal display device of the present invention, the introduction amount of the epoxy compound is not less than 3 mol% and less than 50 mol% relative to the monomer units of the polyamic acid. The maximum value is more preferably not more than 40 mol%. If the introduction amount of the epoxy compound is less than 3 mol%, the effect of reducing the residual carboxyl groups tends to be insufficient. If the introduction amount is not less than 50 mol%, the alignment property of the liquid crystal is deteriorated, which may cause display defect.

The one of the polyamic acid and the polyimide may be a horizontal alignment material for horizontally aligning a liquid crystal. Also, the one of the polyamic acid and the polyimide may be a vertical alignment material for vertically aligning a liquid crystal. The term "horizontal alignment" used herein includes an embodiment of substantially horizontal alignment as long as the effects of the present invention are exerted. The term "vertical alignment" used herein includes an embodiment of substantially vertical alignment as long as the effects of the present invention are exerted.

In the present invention, if the one of the polyamic acid and the polyimide having a degree of imidization of less than 100% (hereinafter, also referred to as polyamic solution) is imidized upon applying thereof to the substrates before lamination of the substrates, rigidity of the monomer units of the polyamic acid increases. As a result, the density of the side chains that can exist on the liquid crystal layer side is lowered, leading to reduction in the initial tilt angle of the liquid crystal molecules. For example, if an alignment film solution having a degree of imidization of not less than 50% is used, the liquid crystal molecules in the resulting liquid crystal cell are horizontally aligned.

The liquid crystal display device of the present invention is compatible with various display modes. However, in order to provide a VA-mode liquid crystal display device, the degree of imidization in the alignment film solution needs to be as low as possible. The most stable vertical alignment can be achieved when the degree of imidization is 0%. Therefore, in the case where the liquid crystal display device of the present invention is a VA-mode liquid crystal display device, preferably a vertical alignment film with a degree of imidization of 0% is used to stabilize the vertical alignment property, and also preferably the ionic impurities in the liquid crystal are prevented from being adsorbed to the carboxyl groups in the alignment film.

Meanwhile, the VA-mode is a display mode in which a negative-type liquid crystal with negative dielectric anisotropy is used, and the liquid crystal molecules are aligned in a substantially vertical direction for a substrate surface when the applied voltage is less than the threshold voltage (for example, when no voltage is applied), and the liquid crystal molecules are tilted in a substantially horizontal direction for the substrate surface when the applied voltage is the threshold voltage or higher. The liquid crystal molecules with negative dielectric anisotropy are liquid crystal molecules having a larger dielectric constant in the short axis direction than in the long axis direction.

The one of the polyamic acid and the polyimide may include a photoreactive functional group. The photoreactive functional group is preferably at least one selected from the group consisting of a cinnamate group, a chalcone group, a tolan group, a coumarin group, and an azobenzene group. Inclusion of such a photoreactive functional group makes it easier to perform divided alignment, and thereby a display device of 4D-RTN-mode can be produced. Moreover, in 4D-RTN-mode, a pretilt angle is changed by electric power supply, causing image sticking. The problem of the image sticking derived from the change in the tilt, angle can be solved by later-described formation of an alignment maintaining layer by using PSA (Polymer Sustained Alignment) technology.

The PSA technology is a technology including steps of dispersing monomers in a liquid crystal, irradiating the liquid crystal with light while applying a voltage thereto to photopolymerize the monomers dispersed in the liquid crystal, thereby forming a polymer on a surface of an alignment film so that the pretilt angle of the liquid crystal on the surface of the alignment film is stabilized by the polymer.

In one embodiment of the liquid crystal display device of the present invention, at least one of the substrates includes the alignment film and an alignment maintaining layer formed by photopolymerization at a position between the alignment film and the liquid crystal layer. This structure makes it possible to reduce a contact area between the alignment film and the liquid crystal while maintaining the alignment status of the liquid crystal. Therefore, the ionic impurities in the liquid crystal layer are less likely to be adsorbed to the carboxyl groups in the alignment film, and thereby a high voltage holding ratio can be maintained.

Examples of the alignment maintaining layer include an alignment maintaining layer formed of a polymer (preferably a photopolymer) consisting of one kind or plural kinds of monomers, in which at least one kind of the monomers is a multifunctional monomer.

The alignment maintaining layer is formed of a photopolymer consisting of one kind or plural kinds of monomers, and at least one kind of the monomers is represented by the following formula (2).

[Chem. 11]

$$P^1—S^1–A^1–(Z^1–A^2)_n–S^2–P^2 \quad (2)$$

In the formula (2), $P^1$ and $P^2$ each independently represent an acrylate group, a methacrylate group, an acrylamide group, a methacrylamide group, a vinyl group, a vinyloxy group, or an epoxy group; $A^1$ and $A^2$ each independently represent a 1,4-phenylene group, a naphthalene-2,6-diyl group, an anthracene-2, 6-diyl group or a phenanthrene-2, 6-diyl group; all or part of hydrogen atoms of $A^1$ and $A^2$ may be substituted with halogens and/or methyl groups; $Z^1$ represents COO, OCO, O, NHCO, or a single bond; $S^1$ and $S^2$ each independently represent $(CH_2)_m$ ($1 \leq m \leq 6$), $(CH_2\text{-}CH_2\text{-}O)_m$ ($1 \leq m \leq 6$), or a single bond; and n is 0, 1, or 2.

In one preferable embodiment of the present invention, in the above formula (2), $P^1$ and $P^2$ each independently represent a methacrylate group; $Z^1$ represents a single bond; n is 0 or 1; $A^1$ and $A^2$ each independently represent a 1, 4-phenylene group, a naphthalene-2, 6-diyl group, or an anthracene-2, 6-diyl group; and $S^1$ and $S^2$ each independently represent $(CH_2)_m$ ($1 \leq m \leq 6$), $(CH_2\text{-}CH_2\text{-}O)_m$ ($1 \leq m \leq 6$), or a single bond.

In the present invention, the alignment film may control, when no voltage is applied, liquid crystal molecules of the liquid crystal layer so that the liquid crystal molecules are aligned to tilt from the normal direction of a main surface of the alignment film.

Moreover, the liquid crystal display device may include a plurality of pixels, and each of the pixels has not less than two areas with different alignment directions of liquid crystal from one another. In particular, in a liquid crystal display device having four of the above areas, the liquid crystal in each pixel is evenly aligned. Such liquid crystal display device has a high response speed, high light transparency, can achieve high contrast ratio, and is thus preferable.

Moreover, the present invention also relates to a method for manufacturing the liquid crystal display device which is configured as above. Namely, the present invention relates to a method for manufacturing a liquid crystal display device including the steps of applying an alignment film material on a main surface of at least one of substrates, and allowing the alignment film material to react to form an alignment film, wherein the alignment film material includes an epoxy compound and one of a polyamic acid and a polyimide having a degree of imidization of less than 100%, and the

film forming step includes reacting the epoxy compound with one of the polyamic acid and the polyimide having a degree of imidization of less than 100%.

In the present invention, the alignment film material is not reacted in the application step, or in other words, positive imidization of the alignment film material is avoided. As a result, even if the alignment film material includes a polymer having, at its side chain, a functional group controlling the alignment of a liquid crystal, the alignment property is not lost. Meanwhile, the term "positive imidization" used herein refers to excluding a small degree of imidization caused by baking treatment and the like.

In the film forming step, reaction between an epoxy compound with one of a polyamic acid and a polyimide having a degree of imidization of less than 100% leads to reduction in residual carboxyl groups in the alignment film, and thereby a residual DC voltage can be reduced.

In the present invention, the method further may include the step of forming an alignment maintaining layer to form a polymer on the alignment film after the film formation step, wherein the alignment maintaining layer forming step includes irradiating a liquid crystal that includes dispersed monomers with light while applying a voltage thereto, to photopolymerize the monomers so that a polymer is formed on the surface of the alignment film. Moreover, the method further may include the step of forming an alignment maintaining layer to form a polymer on the alignment film after the film formation step, wherein the alignment maintaining layer forming step includes irradiating a liquid crystal that includes dispersed monomers with light without applying a voltage, to photopolymerize the monomers so that a polymer is formed on the surface of the alignment film.

In the liquid crystal display device and the method for manufacturing the same according to the present invention, the composition of the alignment film material and the alignment film may be determined by NMR (Nuclear Magnetic Resonance) analysis, Fourier transform infrared spectroscopy (FT-IR), mass spectrometry (MS: Mass Spectrometry), or the like.

Each of the aforementioned embodiments may be appropriately employed in combination within the scope of the present invention.

## EFFECTS OF THE INVENTION

According to the present invention, one of a polyamic acid and a polyimide having a degree of imidization of less than 100% is used as an alignment film material. By avoiding positive imidization of the alignment film material at a stage of the alignment film material, the present invention can become compatible with various display modes such as VA-mode. Also, a liquid crystal display device with reduced occurrence of image sticking on a display can be easily produced by including an epoxy compound in the alignment film material.

## BRIEF DESCRIPTION OF THE DRAWINGS

Fig. 1 is a graph showing a relationship between a DC offset application time and a residual DC voltage in a liquid crystal display device.

Fig. 2 is a graph showing a relationship between logarithm of the adsorption rate constant or the dissociation rate constant and the reciprocal of absolute temperatures.

Fig. 3 is a schematic cross-sectional view showing the structure of a liquid crystal display device according to Embodiment 1.

Fig. 4 is a schematic cross-sectional view showing the structure of a liquid crystal display device according to Embodiment 3.

Fig. 5 is a schematic plain view showing the structure of a pixel electrode of a liquid crystal display device according to Embodiment 5.

## EMBODIMENT FOR CARRYING OUT THE INVENTION

The present invention will be mentioned in more detail referring to the drawings in the following embodiments, but is not limited to these embodiments.

### Embodiment 1

The present embodiment will explain a liquid crystal display device having an alignment film formed of a horizontal alignment material for horizontally aligning a liquid crystal as an example. Fig. 3 is a schematic cross-sectional view showing the structure of the liquid crystal display device according to the present embodiment.

In Fig. 3, a liquid crystal display device 100 includes a TFT array substrate 110, a counter substrate 130 provided facing the TFT array substrate 110, and a liquid crystal layer 120 sandwiched between the TFT array substrate 110 and the counter substrate 130.

The TFT array substrate 110 has, though not shown, a plurality of gate signal lines extended in parallel with one another, a plurality of source signal lines extended in parallel with one another and vertically crossing the gate signal lines, thinfilmtransistors (TFT) provided on respective intersections of the gate signal lines and the source signal lines, and the like, on a main surface on the liquid crystal layer 120 side of a glass support substrate 111.

The gate signal lines and the source signal lines are covered with a gate insulating film, and a drain electrode is formed on the gate insulating layer. Those members are covered with an interlayer insulating film. A pixel electrode is formed on the interlayer insulating film so that it corresponds to each of the pixels. The pixel electrode is connected to the drain electrode via a contact hole formed in the interlayer insulating layer. The TFT includes a gate electrode connected to the gate signal line, a source electrode connected to the source signal lines, and the drain electrode.

The liquid crystal layer 120 is formed of a nematic liquid crystal having positive dielectric anisotropy.

The counter substrate 130 is, for example, a color filter substrate. In this embodiment, a color filter layer is placed on a main surface of a glass support substrate 131, and a counter electrode is disposed with an insulating layer interposed therebetween. The counter electrode is made of, for example, ITO.

Alignment films 112 and 132 are formed on the sides closest to the liquid crystal layer 120 of the above-configured TFT array substrate 110 and the counter substrate 130, respectively.

In the present embodiment, the alignment films 112 and 132 are films formed by reaction of an alignment film material including an polyamic acid represented by following formula (11) and an epoxy compound represented by following formula (12). The solvent is a solution containing γ-butyrolactone, or NMP, or a mixture thereof.

[Chem. 12]

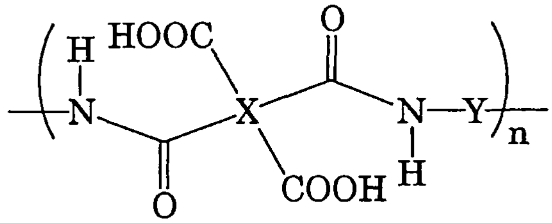

(11)

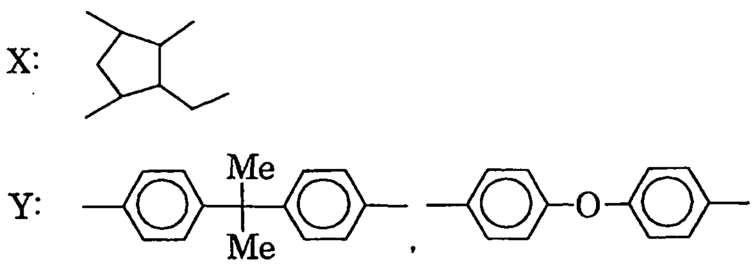

[Chem. 13]

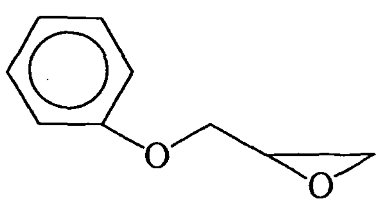

(12)

The liquid crystal display device 100 configured as above is produced, for example, as follows.
First, a method for producing the TFT array substrate 110 will be explained.

The TFT array substrate 110 is produced as follows: a base coat film is formed on a main surface of a washed

glass substrate, various lines such as gate signal lines, and TFT or the like are mounted thereon, followed by covering them with a gate insulating film, and then a drain electrode is formed. Thereafter, the main surface of the substrate is covered with an interlayer insulating film, and a contact hole is formed in the interlayer insulating film.

A conductive film is formed by sputtering or other methods to cover the main surface of the substrate having the above configuration. The conductive film includes a conductive material with high light transmissivity such as Indium Tin Oxide (ITO), Indium Zinc Oxide (IZO), and zinc oxide.

Meanwhile, the counter substrate 130 is produced by forming a color filter layer (not shown) on a main surface of the glass substrate 131, followed by covering with an insulating layer (not shown), and forming a counter electrode (not shown) made of ITO.

The main surfaces on the liquid crystal layer 120 side of the above produced TFT array substrate 110 and the counter substrate 130 were subjected to aligning treatment by rubbing. Next, the alignment film material was applied to the surfaces to form the alignment films 112 and132. Subsequently, a sealing material was applied to one of the substrates, and beads were dispersed on the counter substrate. The substrates were attached to each other so that a rubbing direction was 90°. The sealing material is not particularly limited, and may be a UV curable resin, a thermosetting resin, or the like. Next, a liquid crystal with positive dielectric anisotropy containing a chiral agent was injected between the substrates. Further, polarizers were provided on the support substrates 111 and 131 on the side opposite to the liquid crystal layer 120. Thereby, the liquid crystal display device 100 of TN-mode was produced.

The following will discuss the present embodiment in more detail based on examples and comparative examples.

Examples 1 to 5

Liquid crystal display devices in each of which the amount (additive introduction amount) of the epoxy compound introduced in the aligning agent was different from one another were produced in the same manner as described above. Specifically, the introduction amount of the epoxy compound relative to the amount of the polyamic acid monomer unit was 10 mol% in Example 1, 20 mol% in Example 2, 30 mol% in Example 3, 40 mol% in Example 4, and 50 mol% in Example 5. Measurements of the voltage holding ratio (VHR) and the residual DC voltage (rDC) were performed on each of the liquid crystal display devices. The VHR was measured at 1V (70°C). The residual DC voltage (rDC) wasmeasured with a DC offset voltage of 2V after power supply for 20 hours by Flicker Elimination technology. The temperature of the liquid crystal cell at the time of the measurements was 40 °C.
Table 1 shows the measurement results.

Comparative Example 1

The epoxy compound was not added to the aligning agent. Except for this, the VHR and the residual DC voltage were measured in the same manner as the above examples. Table 1 shows the measurement results.

[Table 1]

| | Comparative Example 1 | Example 1 | Example 2 | Example 3 | Example 4 | Example 5 |
|---|---|---|---|---|---|---|
| Introduction amount of additive (mol%) | 0 | 10 | 20 | 30 | 40 | 50 |
| VHR (%) | 99.3 | 99.3 | 99.4 | 99.5 | 99.5 | 99.5 |
| rDC (mV) | 270 | 80 | 40 | 20 | 20 | - |

As shown in Table 1, the residual DC voltage was high in Comparative Example 1 where the introduction amount of the epoxy compound was 0 mol%. In contrast, the higher the concentration of the introduced additive, the lower the residual DC voltage in Examples 1 to 4 where the epoxy compound was introduced. It is to be noted that, in Example 5, the concentration of the introduced additive was too high, causing liquid crystal alignment defects. Therefore, the residual DC voltage could not be evaluated. It is considered that the residual DC voltage was reduced by introduction of the epoxy compound as shown above because sites capable of adsorbing ionic impurities in the liquid crystal layer on the boundary face of the alignment film were reduced due to reduction in the concentration of the carboxyl groups in the polyamic acid. In contrast, introduction of the epoxy compound only slightly increased the VHR.

Embodiment 2

In the present embodiment, Examples 6 to 13 were performed using liquid crystal display devices of TN-mode produced in the same manner as in Embodiment 1, except that a di-functional epoxy compound or a tri-functional epoxy compound was used as an epoxy compound.

Examples 6 to 13

A polyamic acid represented by the following formula (11) was used as alignment film material. As an epoxy compound, a di-functional epoxy compound represented by the following formula (13) was used in Examples 6 to 9, and a tri-functional epoxy compound represented by the following formula (14) was used in Examples 10 to 13. Further, the amount of the epoxy compound introduced to the aligning agent relative to the amount of the polyamic acid monomer unit was set to the values shown in the "Introduction amount of additive (mol%)" row in Table 2. Then, a TN-mode liquid crystal cell was sandwiched by polarizers in the same manner as in Embodiment 1, and then the VHR and the residual DC voltage were measured. The measurement conditions were the same as those in Example 1.
Table 2 shows the measurement results.
[Chem. 14]

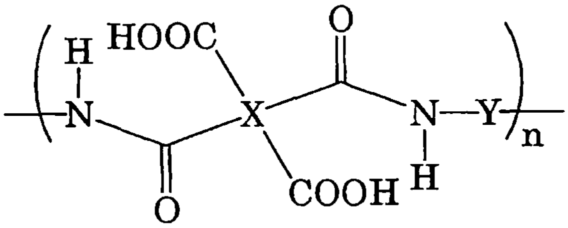

(11)

X: 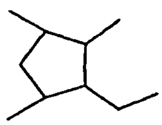

Y: 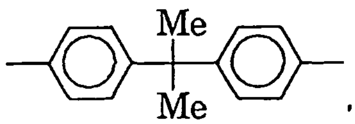 , 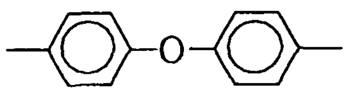

[Chem. 15]

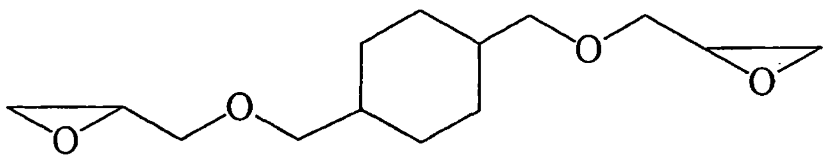

(13)

[Chem. 16]

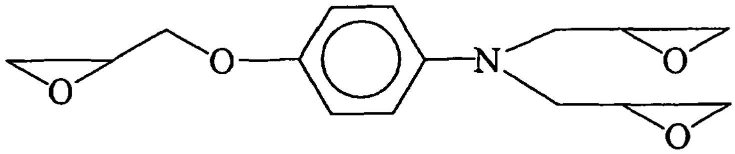

(14)

[Table 2]

| | Example 6 | Example 7 | Example 8 | Example 9 |
|---|---|---|---|---|
| Epoxy compound | di-functional | di-functional | di-functional | di-functional |
| Introduction amount of additive (mol%) | 3 | 15 | 30 | 50 |
| VHR (%) | 99.5 | 99.5 | 99.5 | 99.5 |
| rDC (mV) | 70 | 10 | 0 | × |
| | Example 10 | Example 11 | Example 12 | Example 13 |
| Epoxy compound | tri-functional | tri-functional | tri-functional | tri-functional |
| Introduction amount of additive (mol%) | 3 | 15 | 30 | 50 |
| VHR (%) | 99.5 | 99.5 | 99.5 | 99.5 |
| rDC (mV) | 30 | 0 | 0 | × |
| × : Unmeasurable due to alignment disorder | | | | |

The measurement results in Table 2 show that use of the di-functional epoxy compound or the tri-functional epoxy compound could sufficiently suppress the residual DC voltage, or could completely suppress it to zero (mV) in Examples 6 to 8 and 10 to 12. This is considered because the carboxyl groups were more efficiently consumed (carboxyl groups in the unimidized portion were efficiently reacted with the epoxy compound), and the stability of the polyimide was further increased due to formation of cross-linking structure. It is to be noted that, in Examples 9 and 13, the additive introduction amount was too high, causing liquid crystal alignment defects. Therefore, the residual DC voltage could not be evaluated.

Embodiment 3

The present embodiment will explain a liquid crystal display device having a vertical alignment film formed of a vertical alignment material for vertically aligning a liquid crystal as an example. Fig. 4 is a schematic cross-sectional view showing the structure of the liquid crystal display device according to the present embodiment.

In Fig. 4, a liquid crystal display device 200 includes a TFT array substrate 210, a counter substrate 230 provided facing the TFT array substrate 210, and a liquid crystal layer 220 sandwiched between the TFT array substrate 210 and the counter substrate 230.

The TFT array substrate 210 includes a TFT, various lines, or the like on the main surface on the liquid crystal layer 220 side of the glass support substrate 211 in the same manner as the TFT array substrate 110 according to Embodiment 1.

A pixel electrode 213 is formed so that it corresponds to each of the pixels, and has therein a plurality of slits 214 for controlling the alignment state of the liquid crystal molecules. The slits 214 seen from the normal direction of the substrate surface form a V-shape, and they are disposed with the same distance between them. The alignment film 212 is formed on the side closest to the liquid crystal layer 220 in the TFT array substrate 210.

The liquid crystal layer 220 is not particularly limited as long as it is used in a VA-mode liquid crystal display device. For example, a nematic liquid crystal with negative dielectric anisotropy can be used.

In the counter substrate 230, a plurality of rib-shaped protrusions 234 are formed on the liquid crystal layer 220 side of the main surface of a glass support substrate 231. The counter substrate 230 also includes a counter electrode 233 disposed so that it faces the pixel electrode 213. The plurality of protrusions 234 function to control the alignment

state of the liquid crystal molecules. The protrusions 234 seen from the normal direction of the substrate surface each have a belt-like structure disposed in a V-shape with the same distance between them.

The counter substrate 230 is, for example, a color filter substrate. In this embodiment, a color filter layer is placed on a main surface of the support substrate 231, and a counter electrode 233 is disposed thereon via an insulating layer. The counter electrode 233 is made of ITO or the like. An alignment film 232 is formed on the surface of the substrate nearest to the liquid crystal layer 220.

The slits 214 and the protrusions 234 are alternately disposed with the same distance in between when the substrate surface is seen from the normal direction. This arrangement almost evenly aligns the liquid crystal molecules in each pixel, and thereby a uniformly-displayed image in a wide viewing angle can be achieved.

In the present embodiment, the alignment films 212 and 232 are films formed by reaction of the alignment film material including a polyamic acid for vertical alignment having a structure represented by the following formula (15) in the main chain and a structure represented by the following formula (16) in a side chain, and an epoxy compound represented by the following formula (12). The solvent is a solution containing γ-butyrolactone, or NMP, or a mixture thereof.

[Chem. 17]

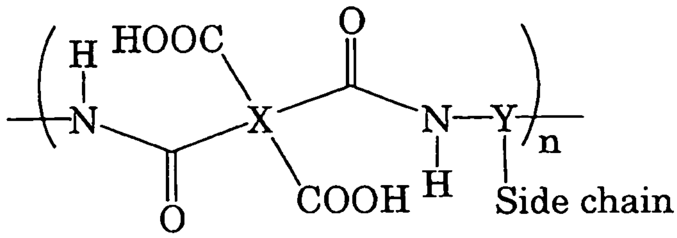

(15)

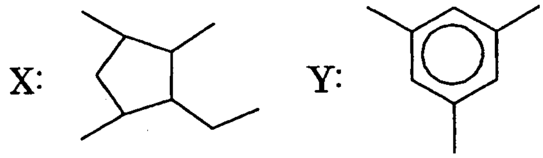

[Chem. 18]

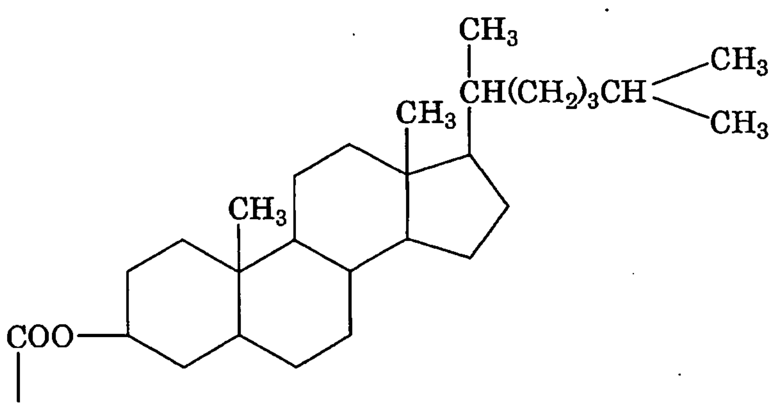

(16)

[Chem. 19]

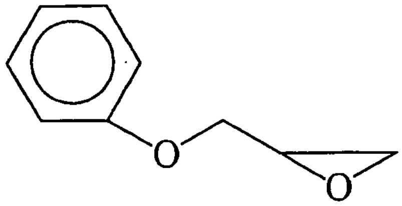

(12)

A liquid crystal display device 200 configured as described above is produced, for example, as follows. First, a method for producing the TFT array substrate 210 is explained below.

The TFT array substrate 210 is produced in a similar manner as in the case of the TFT array substrate 110 as follows: various lines such as gate signal lines, and TFT or the like are formed, followed by covering them with a gate insulating film, and then a drain electrode is formed. Thereafter, the main surface of the substrate is covered with an interlayer insulating film, and a contact hole is formed in the interlayer insulating film.

A conductive film is formed by sputtering or other methods to cover the main surface of the substrate having the above configuration. The conductive film includes a conductive material with high light transmissivity such as indium tin oxide (ITO), indium zinc oxide (IZO), and zinc oxide. Next, a resist film was formed such that it covers the obtained conductive film, followed by exposure and development processing. Thereby, a resist pattern with a desired shape is formed.

The conductive film is subjected to etching through the resist pattern, and the pixel electrode 213 having the V-shaped slits 214 is formed. The etching may be either dry etching or wet etching.

The counter substrate 230 is produced as follows: a color filter layer (not shown) is formed on a main surface of the support substrate 231; the surface is covered with an insulating layer (not shown) ; a photosensitive resin is applied thereon; exposure and development treatment is performed to form the protrusions 234; and the counter electrode 233 made of ITO is formed by sputtering or other methods such that it cover the protrusions 234.

The alignment film material was applied to the main surfaces of the above produced TFT array substrate 210 and the counter substrate 230 on the liquid crystal layer 220 side so that the alignment films 212 and 232 were formed. Subsequently, a sealing material was applied to one of the substrates, and beads were dispersed on the counter substrate 230. The substrates were attached to each other. The sealing material is not particularly limited, and may be a UV curable resin, a thermosetting resin, or the like. Next, a liquid crystal with negative dielectric anisotropy was injected between the substrates, and then heated at 130°C, followed by a treatment for evenly aligning the liquid crystal. Further, polarizers were respectively mounted on the surfaces of the support substrates 211 and 231 on the sides opposite to the liquid crystal layer 220. Thereby, the liquid crystal display device 200 of VA-mode was produced.
The following will discuss the present embodiment in more detail based on examples and comparative examples.

Examples 14 to 18

Liquid crystal display devices in each of which the amount of the epoxy compound introduced in the aligning agent was different from one another were produced in the same manner as described above. Specifically, the amount of the epoxy compound introduced to the aligning agent relative to the amount of the polyamic acid monomer unit was 10 mol% in Example 14, 20 mol% in Example 15, 30 mol% in Example 16, 40 mol% in Example 17, and 50 mol% in Example 18. Measurements of the VHR and residual DC voltage were performed on each of the liquid crystal display devices. The VHR was measured at 1V (70 °C). The residual DC voltage was measured with a DC offset voltage of 2V after power supply for 20 hours by Flicker Elimination technology. The temperature of the cell at the time of the measurements was 40 °C.
Table 3 shows the measurement results.

Comparative Example 2

The epoxy compound was not added to the aligning agent. Except for this, the VHR and the residual DC voltage were measured in the same manner as the above examples. Table 3 shows the measurement results.

[Table 3]

| | Comparative Example 2 | Example 14 | Example 15 | Example 16 | Example 17 | Example 18 |
|---|---|---|---|---|---|---|
| Introduction amount of additive (mol%) | 0 | 10 | 20 | 30 | 40 | 50 |
| VHR (%) | 97.5 | 99.2 | 99.4 | 99.5 | 99.5 | 99.5 |
| rDC (mV) | 400 | 150 | 40 | 10 | 10 | - |

As shown in Table 3, the VHR was low, and the residual DC voltage was high in Comparative Example 2 where the introduction amount of the epoxy compound was zero. In contrast, as the additive introduction amount was increased, the VHR and the residual DC voltage were improved in Examples 14 to 17 where the epoxy compound was introduced. Based on the above, the VHR and the residual DC voltage were improved by introduction of the epoxy compound because sites capable of adsorbing ionic impurities contained in the liquid crystal layer on the boundary face were reduced due to reduction in the concentration of the carboxyl groups in the polyamic acid. In contrast, introduction of the epoxy compound only slightly increased the VHR. Meanwhile, in Example 18, the VHR was good. However, liquid crystal alignment defects occurred, and thus the residual DC voltage could not be evaluated.

Embodiment 4

In the present embodiment, Examples 19 to 26 were performed using liquid crystal display devices of VA-mode produced in the same manner as in Embodiment 3, except that a di-functional epoxy compound or a tri-functional epoxy compound was used as an epoxy compound.

Examples 19 to 26

A polyamic acid having a main chain represented by the following formula (15) and a side chain represented by the following formula (16) was used as alignment film material. As an epoxy compound, a di-functional epoxy compound represented by the following formula (13) was used in Examples 19 to 22, and a tri-functional epoxy compound represented by the following formula (14) was used in Examples 23 to 26. Further, the amount of the epoxy compound introduced to the aligning agent relative to the amount of the polyamic acid monomer unit was set to the values shown in the "additive introduction amount (mol%)" row in Table 4. The solvent was a solution containing γ-butyrolactone, or NMP, or a mixture thereof. Then, a VA-mode liquid crystal cell was sandwiched by polarizers in the same manner as in Embodiment 1, and the VHR and the residual DC voltage were measured. The measurement conditions were the same as those in Example 3.
Table 4 shows the measurement results.
[Chem. 20]

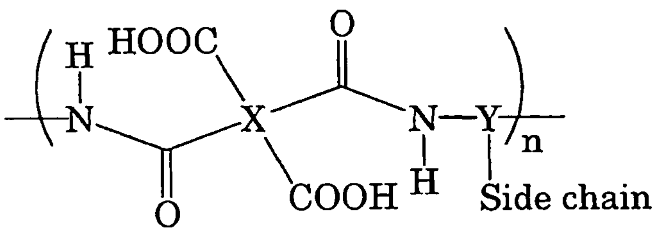

(15)

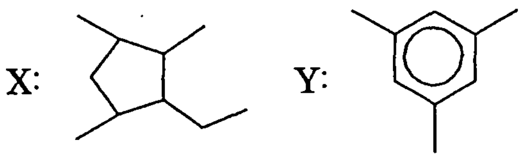

[Chem. 21]

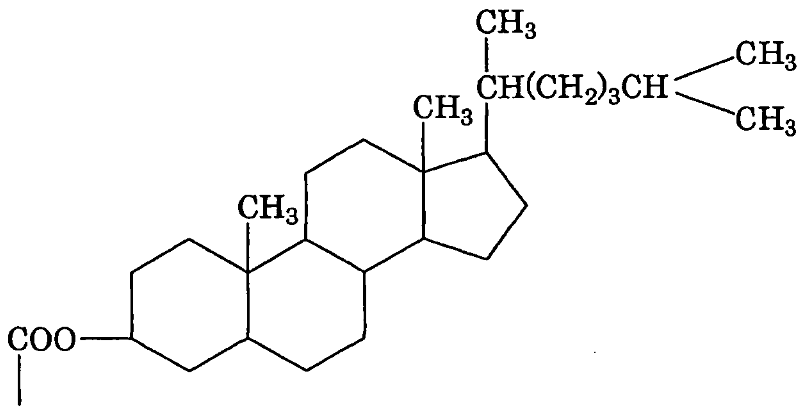

(16)

[Chem. 22]

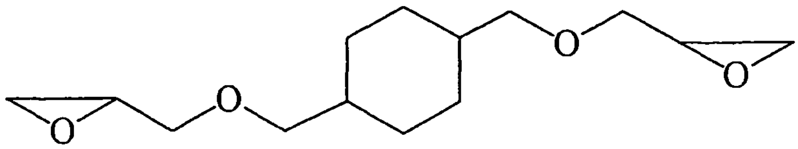

(13)

[Chem. 23]

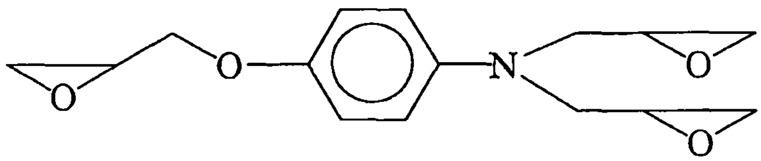

(14)

[Table 4]

| | Example 19 | Example 20 | Example 21 | Example 22 |
|---|---|---|---|---|
| Epoxy compound | di-functional | di-functional | di-functional | di-functional |
| Introduction amount of additive (mol%) | 3 | 15 | 30 | 50 |
| VHR (%) | 99.5 | 99.5 | 99.5 | 99.5 |
| rDC (mV) | 100 | 30 | 0 | × |
| | Example 23 | Example 24 | Example 25 | Example 26 |
| Epoxy compound | tri-functional | tri-functional | tri-functional | tri-functional |

(continued)

| | Example 23 | Example 24 | Example 25 | Example 26 |
|---|---|---|---|---|
| Introduction amount of additive (mol%) | 3 | 15 | 30 | 50 |
| VHR (%) | 99.5 | 99.5 | 99.5 | 99.5 |
| rDC (mV) | 50 | 0 | 0 | × |
| × : Unmeasurable due to alignment disorder | | | | |

The measurement results in Table 4 show that use of the di-functional epoxy compound or the tri-functional epoxy compound could sufficiently suppress the residual DC voltage, or could completely suppress it to zero (mV) in Examples 19 to 21 and 23 to 25. This is considered because the carboxyl groups were more efficiently consumed (carboxyl groups in the unimidized portion were efficiently reacted with the epoxy compound), and the stability of the polyimide was further increased due to formation of cross-linking structure. It is to be noted that, in Examples 22 and 26, the additive introduction amount was too high, causing liquid crystal alignment defects. Therefore, the residual DC voltage could not be evaluated.

The above embodiments are explained by showing, as an example, the case in which the V-shaped slits 214 are formed in the pixel electrode 213, and the belt-like protrusions 234 are disposed in a V-shape. However, the present invention is not limited to the example. The slits may be formed longwise or widthwise in the pixel surface, and also the protrusions may be formed longwise or widthwise in the pixel surface.

Moreover, the above explanation described an example in which the slits 214 were formed in the pixel electrode 213. However, in the present invention, the slits may be formed in the counter electrode 233, and such a structure also exerts the same effects as those described above.

Embodiment 5

The present embodiment describes a liquid crystal display device including a vertical alignment film applied to PSA-mode as an example. In the present embodiment, the alignment films 212 and 232 are films formed by reaction of an alignment film material including a polyamic acid for vertical alignment having a structure represented by the following formula (15) in the main chain and a structure represented by the following formula (16) in a side chain, and an epoxy compound represented by the following formula (12). The solvent is a solution containing γ-butyrolactone, or NMP, or a mixture thereof.

[Chem. 24]

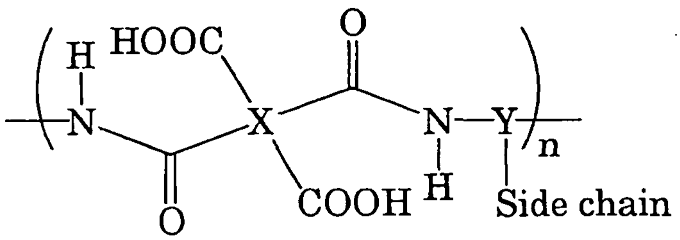

(15)

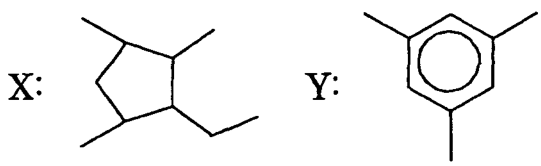

[Chem. 25]

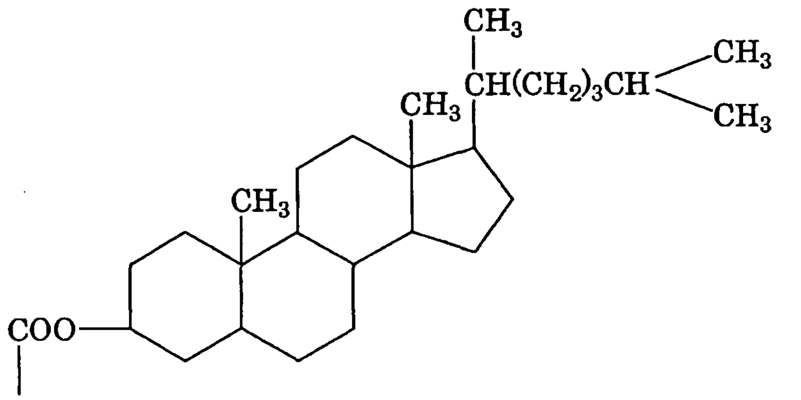

(16)

[Chem. 26]

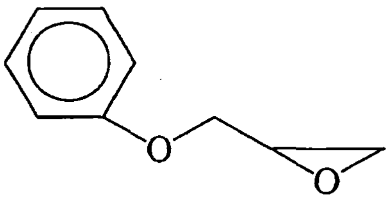

(12)

The liquid crystal display device according to the present embodiment has almost the same structure as that of the liquid crystal display device 200 according to Embodiment 3; however, it has a pixel electrode in a comb-like shape. Fig. 5 is a schematic plane view showing the structure of the pixel electrode of the liquid crystal display device according to the present embodiment. In Fig. 5, a pixel electrode 250 has a comb-like shape including a trunk portion 250a and a plurality of branch portions 250b angularly extended from the trunk portion 250a.

Moreover, a liquid crystal material contains 0.3 wt% of a di-functional monomer represented by the following formula (17).

[Chem. 27]

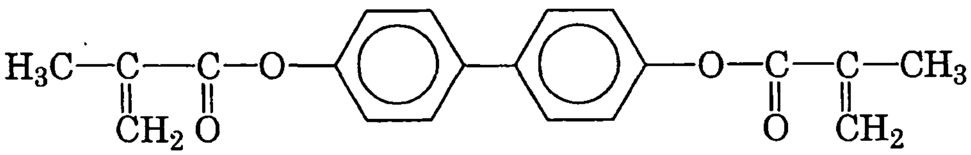

(17)

The following will discuss the present embodiment in more detail based on examples and comparative examples.

Examples 27 to 31

Liquid crystal display devices in each of which the amount of the epoxy compound introduced in the aligning agent was different from one another were produced in the same manner as described above. Specifically, the introduction amount of the epoxy compound relative to the amount of the polyamic acidmonomer unit was 10 mol% in Example 27, 20 mol% in Example 28, 30 mol% in Example 29, 40 mol% in Example 30, and 50 mol% in Example 31. Next, liquid crystal cells were produced in the same manner as in Embodiment 3, followed by heating at 130°C and quenching, and subsequently UV light irradiation at 300 nm to 400 nm for two hours while applying a voltage to polymerize the monomer. Accordingly, polymer layers were formed on the respective alignment films. Thereby, PSA-mode liquid crystal display devices capable of tilting the liquid crystal could be obtained.

Measurements of the VHR and residual DC voltage were performed on each of the obtained liquid crystal

display devices. The VHR was measured at 1V (70°C). The DC offset voltage was 2V upon measuring the residual DC voltage. The residual DC voltage after 20-hour power supply was measured by Flicker elimination technology. The temperature of the cell at the time of the measurement was 40°C.
Table 5 shows the measurement results.

Comparative Example 3

The epoxy compound was not added to the aligning agent. Except for this, the VHR and the residual DC voltage were measured in the same manner as Examples 27 to 31. Table 5 shows the measurement result.
[Table 5]

| | Comparative Example 3 | Example 27 | Example 28 | Example 29 | Example 30 | Example 31 |
|---|---|---|---|---|---|---|
| Introduction amount of additive (mol%) | 0 | 10 | 20 | 30 | 40 | 50 |
| VHR (%) | 98.1 | 98.4 | 98.6 | 98.8 | 98.8 | 98.8 |
| rDC (mV) | 60 | 30 | 20 | 20 | 20 | - |

As shown in Table 5, in PSA-mode liquid crystal display devices, as the epoxy group content increased, slightly better values of the VHR and the residual DC voltage were achieved. Moreover, in Comparative Example 3, the residual DC voltage was lower than that in the case (Comparative Example 1) where the epoxy group content was zero in TN-mode liquid crystal display device, and better values were obtained in the VHR and the residual DC voltage as compared with the case (Comparative Example 2) where the epoxy group content was zero in MVA-mode liquid crystal display device. This is considered because the alignment maintaining layer formed by the PSA technology prevented even a small amount of the residual carboxyl acid on the surface of the alignment film frombeing exposed to the liquid crystal layer, or in other words, the amount of the carboxyl groups exposed to the surface was reduced by the formed alignment maintaining layer. Therefore, in the present embodiment, the VHR and the residual DC voltage were considered to be improved due to the alignment maintaining layer formed by the PSA technology, rather than the effect obtained by addition of the epoxy compound.
The reason why the VHR was overall as low as in the 98% range was considered because the liquid crystal material was partly decomposed by exposure to the UV light used when the alignment maintaining layer was formed by the PSA technology.

Embodiment 6

In the present embodiment, Examples 32 to 39 were performed using liquid crystal display devices of PSA-mode produced in the same manner as in Embodiment 5, except that a di-functional epoxy compound or a tri-functional epoxy compound was used as an epoxy compound.

Examples 32 to 39

A polyamic acid having a main chain structure represented by the following formula (15) and a side chain structure represented by the following formula (16) was used as alignment film material forming the alignment films 212 and 232 in the same manner as the aforementioned Embodiment 5. As an epoxy compound to be added, a di-functional epoxy compound represented by the following formula (13) was used in Examples 32 to 35, and a tri-functional epoxy compound represented by the following formula (14) was used in Examples 36 to 39.
The solvent was a solution containing γ-butyrolactone, or NMP, or a mixture thereof.
[Chem. 28]

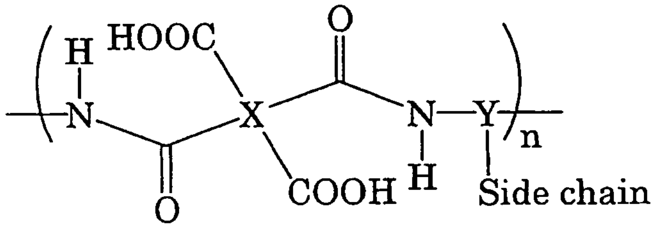

(15)

X: 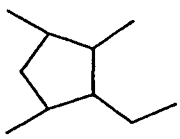 Y: 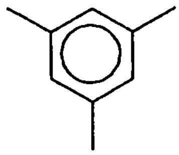

[Chem. 29]

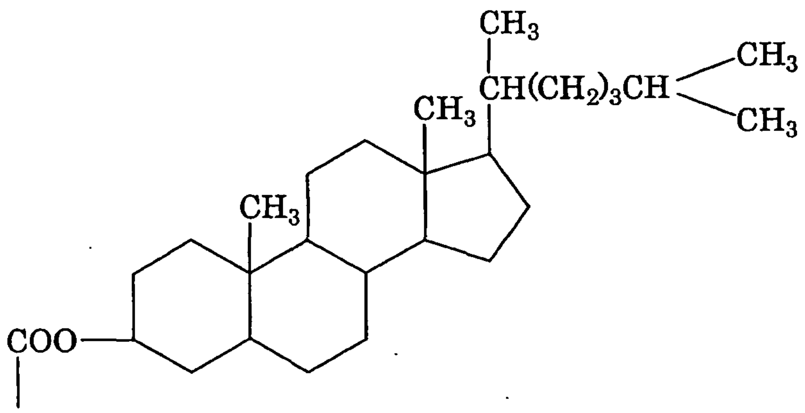

(16)

[Chem. 30]

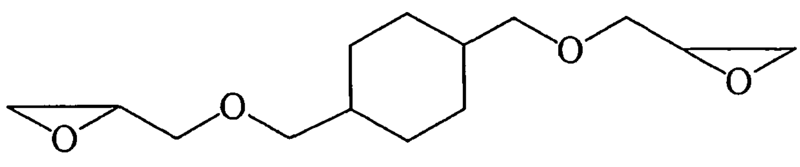

(13)

[Chem. 31]

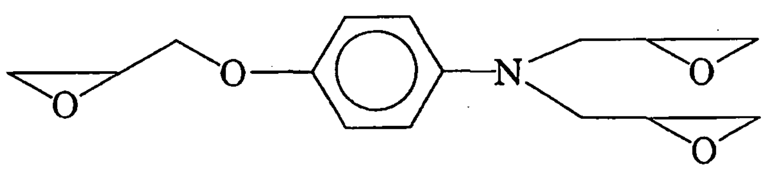

(14)

The amount of the epoxy compound introduced to the aligning agent relative to the amount of the polyamic acid monomer unit was set to the values shown in the "additive introduction amount (mol%)" row in Table 6.

The PSA-mode liquid crystal cell, which was produced in the same steps as those in the aforementioned Embodiment 5, was sandwiched by polarizers and then the VHR and the residual DC voltage were measured. The measurement conditions were the same as those in Embodiment 5. Table 6 shows the measurement results.

[Table 6]

| | Example 32 | Example 33 | Example 34 | Example 35 |
|---|---|---|---|---|
| Epoxy compound | di-functional | di-functional | di-functional | di-functional |
| Introduction amount of additive (mol%) | 3 | 15 | 30 | 50 |
| VHR (%) | 98.6 | 99.3 | 99.5 | 99.5 |
| rDC (mV) | 20 | 0 | 0 | × |
| | Example 36 | Example 37 | Example 38 | Example 39 |
| Epoxy compound | tri-functional | tri-functional | tri-functional | tri-functional |
| Introduction amount of additive (mol%) | 3 | 15 | 30 | 50 |
| VHR (%) | 99.0 | 99.5 | 99.5 | 99.5 |
| rDC (mV) | 10 | 0 | 0 | × |
| × : Unmeasurable due to alignment disorder | | | | |

As shown in Table 6, use of the di-functional epoxy compound or the tri-functional epoxy compound could sufficiently suppress the residual DC voltage, or could completely suppress it to zero mV in Examples 32 to 34 and 36 to 38. This is considered because the carboxyl groups were more efficiently consumed (carboxyl groups in the unimidized portion were efficiently reacted with the epoxy compound). It is to be noted that, in Examples 35 and 39, the additive introduction amount was too high, causing liquid crystal alignment defects. Therefore, the residual DC voltage could not be evaluated.

In the PSA-mode liquid crystal display devices, use of the di-functional epoxy compound or the tri-functional epoxy compound further reduced the residual DC voltage. Based on the results, it is proved that reduction in the carboxyl group concentration achieved by increase in the concentration of the epoxy group is also important as well as the effect of reducing the amount of the carboxyl groups exposed to the surface by the formed alignment maintaining layer.

Embodiment 7

In the present embodiment, the alignment films 212 and 232 are films formed by reaction of an alignment film material including a polyamic acid having a structure represented by the following formula (18) and an epoxy compound represented by the following formula (12). The solvent is a solution containing γ-butyrolactone, or NMP, or a mixture thereof.

[Chem. 32]

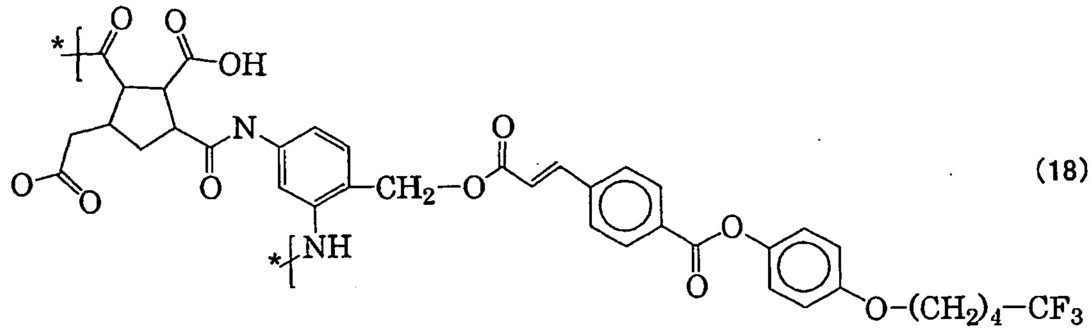

(18)

[Chem. 33]

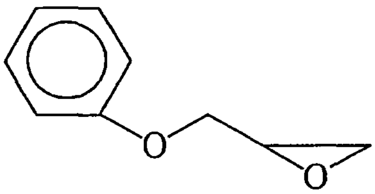

(12)

In formation of the alignment films 212 and 232, an alignment treatment was performed by irradiating the alignment filmmaterial applied to substrates with linearly polarized light fromaninclineddirection. Then, a sealing material was applied to one of the substrates, and beads were dispersed on the counter substrate. The substrates were attached to each other, and then liquid crystal with negative dielectric anisotropy was injected between the substrates. An amount of 0.3 wt% of a di-functional monomer represented by the following formula (17) was added in the liquid crystal. After injection of the liquid crystal, the resulting product was heated at 130°C and then quenched. Subsequently, the cell was irradiated with light emitting at a range of 300 nm to 400 nm for two hours for polymerization. During the polymerization, no voltage was applied to the liquid crystal cell.

[Chem. 34]

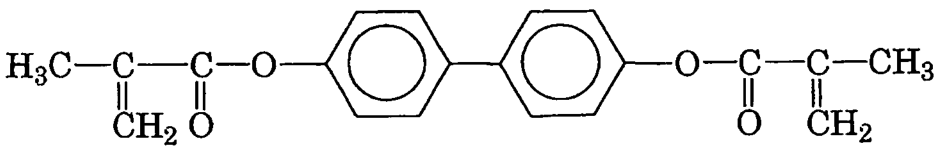

(17)

Examples 40 to 42 and Comparative Example 4 were performed using liquid crystal display devices produced in the same manner as described above, in each of which the amount of the epoxy compound introduced in the aligning agent was different from one another.

Examples 40 to 42, Comparative Example 4

The introduction amount of the epoxy compound was set up to 30 mol% based on the previous test results. The introduction amount of the epoxy compound relative to the amount of the polyamic acid monomer unit was 10 mol% in Example 40, 20 mol% in Example 41, and 30 mol% in Example 42. The epoxy compound was not introduced in Comparative Example 4.

The cell produced by the above process was sandwiched between polarizers, and the VHR and residual DC voltage were measured. The VHR was measured at 1V (70°C). The DC offset voltage was 2V upon measuring the

residual DC voltage. The residual DC voltage after 20-hour of power supply was measured by Flicker elimination technology. The temperature of the cell at the time of the measurement was 40°C.
Table 7 shows the measurement results.
[Table 7]

| | Comparative Example 4 | Example 40 | Example 41 | Example 42 |
|---|---|---|---|---|
| Introduction amount of additive (mol%) | 0 | 10 | 20 | 30 |
| VHR (%) | 98.5 | 98.7 | 98.7 | 98.9 |
| rDC (mV) | 80 | 30 | 20 | 10 |

As shown in Table 7, in Examples 40 to 42, the residual DC voltage was decreased with increasing concentration of the introduced epoxy compound (additive). The residual DC voltage was considered to be reduced because formation of the alignment maintaining layer by the PSA technology greatly reduced the amount of the exposed carboxyl groups even with 0 mol% additive introduction amount. Also addition of the epoxy compound in the aligning agent further reduced the concentration of the carboxyl groups on the film surface so that sites on the boundary surface which adsorb ionic impurities contained in the liquid crystal layer decreased. Meanwhile, the VHR was only slightly increased. This is considered because the liquid crystal material was partly decomposed by exposure to the UV light used when the alignment maintaining layer was formed by the PSA technology.
In Comparative Example 4, due to no introduction of the epoxy compound, the VHR was low, and the residual DC voltage was high.
For comparison with Examples 40 to 42, Examples 43 to 45 and Comparative Example 5 were performed by producing and using 4D-RTN-mode liquid crystal cells with no alignment maintaining layer, in each of which the amount of the epoxy compound introduced in the aligning agent was different from one another.

Examples 43 to 45, Comparative Example 5

The introduction amount of the epoxy compound relative to the amount of the polyamic acid monomer unit was 10 mol% in Example 43, 20 mol% in Example 44, and 30 mol% in Example 45. No epoxy compound was introduced in Comparative Example 5.
The cell produced by the above process was sandwiched between polarizers, and the VHR and residual DC voltage were measured. The VHR was measured at 1V (70°C). The DC offset voltage was 2V upon measuring the residual DC voltage. The residual DC voltage after 20-hour of power supply was measured by Flicker elimination technology. The temperature of the cell at the time of the measurement was 40°C.
Table 8 shows the measurement results.
[Table 8]

| | Comparative Example 5 | Example 43 | Example 44 | Example 45 |
|---|---|---|---|---|
| Introduction amount of additive (mol%) | 0 | 10 | 20 | 30 |
| VHR (%) | 99.4 | 99.4 | 99.4 | 99.4 |
| rDC (mV) | 600 | 480 | 320 | 250 |

As shown in Table 8, the VHR was high in Examples 43 to 45. This is considered because the concentration of ionic impurities in the liquid crystal layer was low due to no ultraviolet light irradiation for forming an alignment maintaining layer by the PSA technology. Meanwhile, the effect of reducing the residual DC voltage was smaller than that in Examples 40 to 42. The residual DC voltage became lower with increasing introduction amount of the epoxy compound (additive), but did not reach the target 50 mV level. This is considered because ionic impurities slightly contained in the liquid crystal layer were adsorbed on the surfaces of the carboxyl groups and stably existed there.
In Comparative Example 5, due to no introduction of an epoxy compound, the VHR was high, but the residual DC voltage was high.

Embodiment 8

The liquid crystal display device according to the present embodiment is an RTN-mode liquid crystal display device. The alignment film material includes, as a polyamic acid and an epoxy compound, a polyamic acid having a structure represented by the following formula (18) and a di-functional epoxy compound having a structure represented by the following formula (13), respectively.

[Chem. 35]

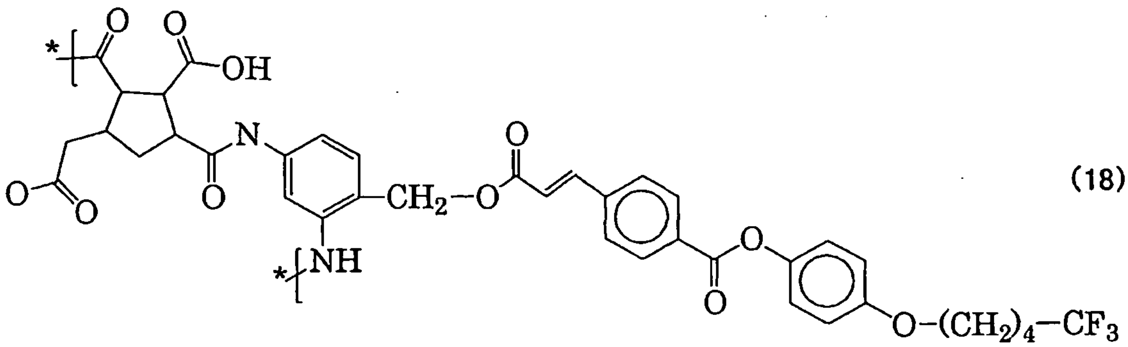

(18)

[Chem. 36]

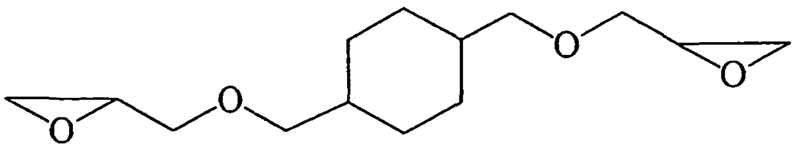

(13)

Properties of the liquid crystal display device according to the present embodiment will be explained with reference to Examples and Comparative Examples described below. In Examples 46 to 48 and Comparative Example 6, an alignment maintaining layer was formed by the PSA technology in the liquid crystal display device of the present embodiment. In Examples 49 to 51 and Comparative Example 7, an alignment maintaining layer produced by the PSA technology was not provided in the liquid crystal display device of the present embodiment. Meanwhile, an epoxy compound was not added in Comparative Examples 6 and 7.

Examples 46 to 48, Comparative Example 6

The introduction amount of the epoxy compound relative to the amount of the polyamic acid monomer unit was 10 mol% in Example 46, 20 mol% in Example 47, and 30 mol% in Example 48. The epoxy compound was not introduced in Comparative Example 6. Except for the above, the VHR and the residual DC voltage were measured under the same conditions as those in the aforementioned Embodiment 7. Table 9 shows the measurement results.

[Table 9]

| | Comparative Example 6 | Example 46 | Example 47 | Example 48 |
|---|---|---|---|---|
| Introduction amount of additive (mol%) | 0 | 10 | 20 | 30 |
| VHR (%) | 98.5 | 98.8 | 98.8 | 99.2 |
| rDC (mV) | 80 | 20 | 0 | 0 |

Examples 49 to 51, Comparative Example 7

The introduction amount of the epoxy compound relative to the amount of the polyamic acid monomer unit was 10 mol% in Example 49, 20 mol% in Example 50, and 30 mol% in Example 51. The epoxy compound was not introduced in Comparative Example 7. The VHR and the residual DC voltage were measured under the same conditions as those in the above Examples 46 to 48, except that an alignment maintaining layer was not formed. Table 10 shows the measurement results.

[Table 10]

| | Comparative Example 7 | Example 49 | Example 50 | Example 51 |
|---|---|---|---|---|
| Introduction amount of additive (mol%) | 0 | 10 | 20 | 30 |
| VHR (%) | 99.4 | 99.4 | 99.5 | 99.5 |
| rDC (mV) | 600 | 250 | 110 | 60 |

As shown in Table 9, a larger reduction in the residual DC voltage was achieved in the case where a di-functional epoxy compound was used as an epoxy compound than in the case where a mono-functional epoxy compound was used. This is considered because the residual amount of the carboxyl groups was smaller as compared with the case of the mono-functional epoxy compound.

As shown in Table 10, in the case where no alignment maintaining layer was formed, the effect of reducing the residual DC voltage became higher by addition of the di-functional epoxy compound than by addition of the mono-functional epoxy compound. This is considered because the di-functional epoxy compound effectively removed the carboxyl groups which were significantly exposed to the surface due to non-existence of an alignment maintaining layer.

Embodiment 9

The liquid crystal display device according to the present embodiment is an RTN-mode liquid crystal display device. The alignment filmmaterial includes, as a polyamic acid and an epoxy compound, a polyamic acid having a structure represented by the following formula (18) and a tri-functional epoxy compound having a structure represented by the following formula (14), respectively.

[Chem. 37]

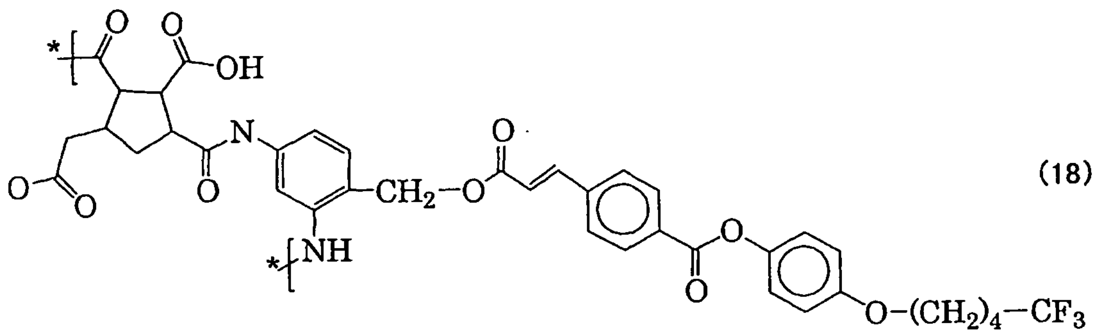

(18)

[Chem. 38]

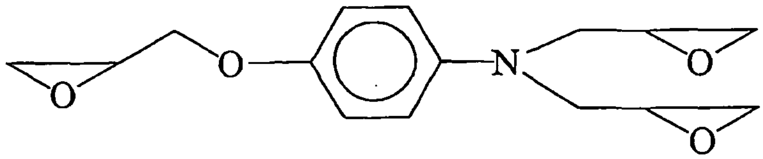

(14)

Properties of the liquid crystal display device according to the present embodiment will be explained with reference to Examples and Comparative Examples described below. In Examples 52 to 54 and Comparative Example 8, an alignment maintaining layer was formed in the liquid crystal display device of the present embodiment. In Examples 55 to 57 and Comparative Example 9, an alignment maintaining layer was not provided in the liquid crystal display device of the present embodiment. Meanwhile, an epoxy compound was not added in Comparative Examples 8 and 9.

Examples 52 to 54, Comparative Example 8

The introduction amount of the epoxy compound relative to the amount of the polyamic acid monomer unit was 10 mol% in Example 52, 20 mol% in Example 53, and 30 mol% in Example 54. The epoxy compound was not introduced in Comparative Example 8. Except for the above, the VHR and the residual DC voltage were measured under the same conditions as those in the aforementioned Embodiment 7. Table 11 shows the measurement results.

[Table 11]

| | Comparative Example 8 | Example 52 | Example 53 | Example 54 |
|---|---|---|---|---|
| Introduction amount of additive (mol%) | 0 | 10 | 20 | 30 |
| VHR (%) | 98.5 | - | - | - |
| DC (mV) | 80 | Unmeasurable | Unmeasurable | Unmeasurable |

Examples 55 to 57, Comparative Example 9

The introduction amount of the epoxy compound relative to the amount of the polyamic acid monomer unit was 10 mol% in Example 55, 20 mol% in Example 56, and 30 mol% in Example 57. The epoxy compound was not introduced in Comparative Example 9. The VHR and the residual DC voltage were measured under the same conditions as those in the above Examples 52 to 54, except that an alignment maintaining layer was not formed. Table 12 shows the measurement results.

[Table 12]

| | Comparative Example 9 | Example 55 | Example 56 | Example 57 |
|---|---|---|---|---|
| Introduction amount of additive (mol%) | 0 | 10 | 20 | 30 |
| VHR (%) | 99.4 | - | - | - |
| DC (mV) | 600 | Unmeasurable | Unmeasurable | Unmeasurable |

As shown in Tables 11 and 12, in Examples 52 to 57 in each of which a tri-functional epoxy compound was used, measurement by Flicker Elimination technology could not be conducted regardless of existence or non-existence of an alignment maintaining layer. Then, observation of each of the cells with a microscope (scanning electron microscope) showed that the liquid crystal molecules were horizontally aligned. The cause of the horizontal alignment of the liquid crystal molecules may be highly-crosslinked polyimide, which led to difficulty in distribution of side chains on the film surface.

The results reveal that, in the case where the polyamic acid having a structure represented by the formula (18) is used as alignment filmmaterial, onlyamono-functionalepoxycompound and a di-functional epoxy compound can be

used.

Embodiment 10

The present embodiment will explain influence of the time period after application of the alignment film material on the substrate in a liquid crystal display device in which an alignment film material and a liquid crystal material having the same structure as those in Embodiment 7 are used. Namely, the alignment films 212 and 232 are films formed by reaction of an alignment film material including a polyamic acid having a structure represented by the formula (18) and an epoxy compound represented by the following formula (12). The solvent is a solution containing y-butyrolactone, or NMP, or a mixture thereof. The liquid crystal contains a di-functional monomer having a structure represented by the following formula (17).

[Chem. 39]

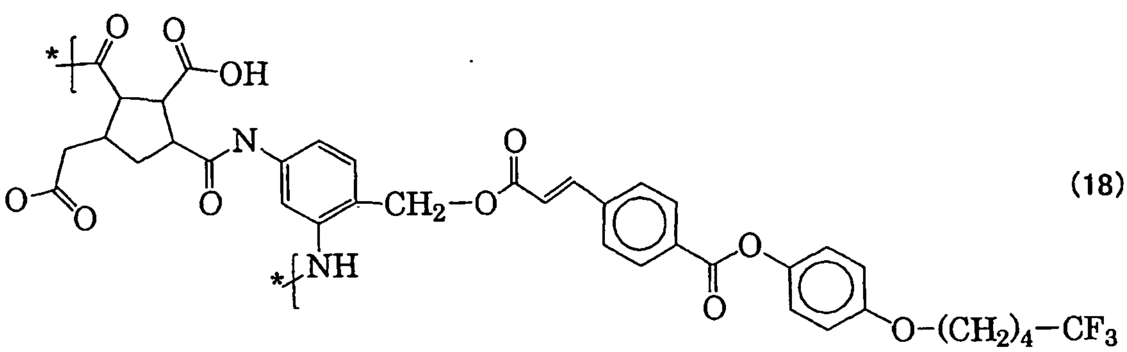

(18)

[Chem. 40]

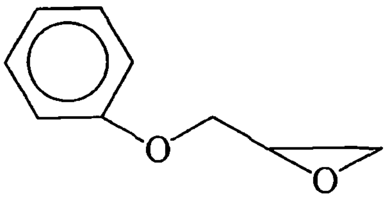

(12)

[Chem. 41]

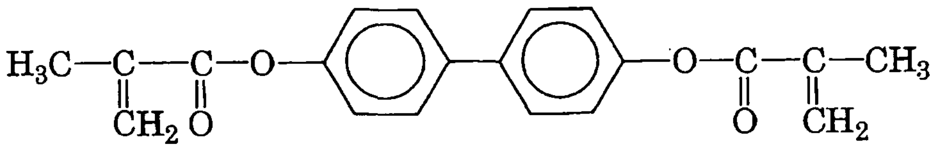

(17)

First, the alignment film material was applied to only one of the substrates. Next, an alignment treatment was performed by irradiating the alignment film material applied to the substrate with linearly polarized light from an inclined direction, followed by allowing the substrate to stand in the atmosphere at a room temperature for 10 hours. Next, a film was formed on the other substrate in the same manner, and was irradiated with linearly polarized light. Immediately thereafter, a sealing material was applied to one of the substrates, and beads were dispersed on the counter substrate. The substrates were attached to each other, and then a liquid crystal with negative dielectric anisotropy was injectedbetween the substrates. In the same manner as in Embodiment 7, 0.3 wt% of a di-functional monomer represented by the formula (17) was added in the liquid crystal.

After injection of the liquid crystal, the resulting product was heated at 130°C and then quenched. Subsequently, the cell was irradiated with light emitting at a range of 300 nm to 400 nm for two hours for polymerization. During the polymerization, no voltage was applied to the liquid crystal cell.

Properties of the liquid crystal display devices produced as above were examined with different time periods from one another after formation of the alignment film. In examples 58 to 60 and Comparative Example 10, an alignment maintaining layer was formed in the liquid crystal display device of the present embodiment. In Examples 61 to 63 and Comparative Example 11, an alignment maintaining layer was not provided in the liquid crystal display device of the present embodiment. Meanwhile, an epoxy compound was not added in Comparative Examples 10 and 11.

Examples 58 to 60, Comparative Example 10

The introduction amount of the epoxy compound relative to the amount of the polyamic acid monomer unit was 10 mol% in Example 58, 20 mol% in Example 59, and 30 mol% in Example 60. The epoxy compound was not introduced in Comparative Example 10. Then, the cell produced by the above process was sandwiched between polarizers, and the VHR and residual DC voltage were measured. The VHR was measured at 1V (70°C). Upon measuring the residual DC voltage, a rectangular voltage of 10V was applied, and a direct current offset voltage was not superimposed. The residual DC voltage after 20-hour power supply under the above condition was measured by Flicker elimination technology. The temperature of the cell at the time of the measurement was 40°C. Table 13 shows the measurement results.

[Table 13]

| | Comparative Example 10 | Example 58 | Example 59 | Example 60 |
|---|---|---|---|---|
| Introduction amount of additive (mol%) | 0 | 10 | 20 | 30 |
| VHR (%) | 98.1 | 98.2 | 98.2 | 98.3 |
| rDC (mV) | 190 | 100 | 60 | 40 |

As shown in Table 13, in Examples 58 to 60, a DC offset voltage was not applied during the power supply for evaluating a residual DC voltage; however, a residual DC voltage was observed. This is considered because the various time periods of allowing the substrates to stand during production of the liquid crystal cell resulted in asymmetry in the liquid crystal cell. Namely, even if a symmetrical rectangular voltage was applied from outside of the liquid crystal cell, the voltage applied to the liquid crystal layer might be asymmetric between the positive polarity and the negative polarity.

Meanwhile, in the case of no introduction of the epoxy compound as shown in Comparative Example 10, the residual DC voltage was relatively large, and the VHR was small. However, as the introduction amount of the additive increased, the residual DC voltage became smaller. The VHR was only slightly enhanced. The cause of the reduction in the residual DC voltage is considered because, as described earlier, since the concentration of the carboxyl groups in the polyamic acid decreased, sites on the boundary surface capable of adsorbing ionic impurities contained in the liquid crystal layer decreased.

For comparison with Examples 58 to 60 and Comparative Example 10, liquid crystal cells in each of which an alignment maintaining layer was not formed by the PSA technology were produced. Then, in the similar manner as above, Examples 61 to 63 and Comparative Example 11 were performed in which the amount of the epoxy compound introduced in an aligning agent was different from one another.

Examples 61 to 63, Comparative Example 11

The introduction amount of the epoxy compound relative to the amount of the polyamic acid monomer unit was 10 mol% in Example 61, 20 mol% in Example 62, and 30 mol% in Example 63. The epoxy compound was not introduced in Comparative Example 11.

The cell produced by the above process was sandwiched between polarizers, and the VHR and residual DC voltage were measured under the same conditions as those in Examples 58 to 60 and Comparative Example 10. Table 14 shows the measurement results.

[Table 14]

| | Comparative Example 11 | Example 61 | Example 62 | Example 63 |
|---|---|---|---|---|
| Introduction amount of additive (mol%) | 0 | 10 | 20 | 30 |
| VHR (%) | 96.1 | 96.9 | 97.2 | 97.7 |
| rDC (mV) | 2500 | 1100 | 650 | 320 |

As shown in Table 14, the VHR was lower in Examples 61 to 63 than in Examples 58 to 60. The reason for this is considered as follows. Since an alignment maintaining layer was not provided in Examples 61 to 63, polar solvents and impurities in the atmosphere were attached to the surface of the alignment film while the substrates were allowed to stand after formation of the alignment film, causing adsorption of ionic impurities in the liquid crystal layer. As a result, the VHR was decreased.

Moreover, in Examples 61 to 63, the residual DC voltage is larger by one digit in Examples 61 to 63 than in Examples 58 to 60. This is considered not only because polar solvents in the atmosphere were included while the substrates were allowed to stand in the liquid crystal cell production, but also because ionic impurities in the liquid crystal were included after attachment of the substrates. However, the residual DC voltage tends to be greatly reduced with increasing introduction amount of the epoxy compound. This is considered to be achieved by decreased carboxyl group concentration on the surface of the alignment film. Moreover, formation of the alignment maintaining layer by the PSA technology leads to great reduction in the amount of the exposed carboxyl groups even if the introduction amount of the additive is 0 mol%. As a result, the residual DC voltage is greatly reduced. Furthermore, addition of the epoxy compound to the aligning agent can further reduce the carboxyl group concentration in the alignment film, and thereby the residual DC voltage can be further reduced. Namely, if an epoxy compound is introduced in the alignment film, and also a polymer layer (i.e. alignment maintaining layer) formed by the PSA technology is provided on the alignment film, remarkably excellent effects of preventing the residual DC voltage from being increased and avoiding image sticking can be achieved even with 0% imidization. The aforementioned embodiment is especially preferable mode of the present invention.

The aforementionedmodes of the embodiments may be employed in appropriate combination as long as the combination is not beyond the spirit of the present invention.

The present application claims priority to Patent Application No. 2009-235727 filed in Japan on October 9, 2009 under the Paris Convention and provisions of national law in a designated State, the entire contents of which are hereby incorporated by reference.

EXPLANATION OF NUMERALS AND SYMBOLS

110: TFT array substrate
111, 131: Support substrate
112: Pixel electrode
114: Slit
120: Liquid crystal layer
130: Counter substrate
132: Protrusion
133: Counter electrode
100, 200: Liquid crystal display device

## Claims

**1.** A liquid crystal display device comprising a pair of substrates,
a liquid crystal layer provided between the substrates, and
an alignment filmprovidedbetween the liquid crystal layer and at least one of the substrates,
wherein the alignment film is formed by reacting an epoxy compound with a carboxyl group of one of a polyamic acid and a polyimide having a degree of imidization of less than 100%.

**2.** The liquid crystal display device according to claim 1,
wherein the alignment film includes a structural unit represented by the following formula (1):

[Chem. 1]

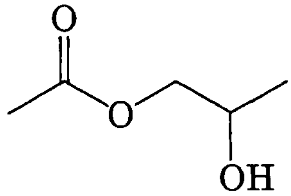

(1)

3. The liquid crystal display device according to claim 1 or 2, wherein the introduction amount of the epoxy compound is not less than 3 mol% and less than 50 mol% relative to the monomer units of polyamic acid.

4. The liquid crystal display device according to any one of claims 1 to 3, wherein at least one of the substrates further comprises the alignment film, and an alignment maintaining layer formed by photopolymerization at a position between the alignment film and the liquid crystal layer.

5. The liquid crystal display device according to any one of claims 1 to 4, wherein one of the polyamic acid and the polyimide is a horizontal alignment material for horizontally aligning a liquid crystal.

6. The liquid crystal display device according to any one of claims 1 to 4, wherein one of the polyamic acid and the polyimide is a vertical alignment material for vertically aligning a liquid crystal.

7. The liquid crystal display device according to claim 5 or 6, wherein one of the polyamic acid and the polyimide comprises a photoreactive functional group.

8. The liquid crystal display device according to claim 7, wherein the photoreactive functional group is at least one selected from the group consisting of a cinnamate group, a chalcone group, a tolan group, a coumarin group, and an azobenzene group.

9. The liquid crystal display device according to any one of claims 1 to 8, wherein the epoxy compound is a mono-functional, di-functional, or tri-functional epoxy compound.

10. The liquid crystal display device according to claim 4, wherein the alignment maintaining layer is formed of a polymer of one kind or plural kinds of monomers, and at least one kind of the monomers is a multifunctional monomer.

11. The liquid crystal display device according to claim 4, wherein the alignment maintaining layer is formed of a photopolymer of one kind or plural kinds of monomers, and at least one kind of the monomers is represented by the following formula (2):

$$P^1-S^1-A^1-(Z^1-A^2)_n-S^2-P^2 \qquad (2)$$

in the formula (2), $P^1$ and $P^2$ each independently represent a methacrylate group, an acrylate group, an acrylamide group, a methacrylamide group, a vinyl group, a vinyloxy group, or an epoxy group; $A^1$ and $A^2$ each independently represent a 1,4-phenylene group, a naphthalene-2,6-diyl group, an anthracene-2, 6-diyl group or a phenanthrene-2, 6-diyl group; all or part of hydrogen atoms of $A^1$ and $A^2$ may be substituted with halogens and/or methyl groups; $Z^1$ represents COO, OCO, O, NHCO, or a single bond; $S^1$ and $S^2$ each independently represent $(CH_2)_m$ ($1 \le m \le 6$), $(CH_2-CH_2-O)_m$ ($1 \le m \le 6$), or a single bond; and n is 0, 1, or 2.

12. The liquid crystal display device according to claim 4, wherein the alignment maintaining layer is formed of a photopolymer of one kind or plural kinds of monomers, and at least one kind of the monomers is represented by the above formula (2), in which $P^1$ and $P^2$ each independently represent a methacrylate group; $Z^1$ represents a single bond; n is 0 or 1; $A^1$ and $A^2$ each independently represent

a 1, 4-phenylene group, a naphthalene-2, 6-diyl group, or an anthracene-2, 6-diyl group; and $S^1$ and $S^2$ each independently represent $(CH_2)_m$ $(1 \leq m \leq 6)$, $(CH_2\text{-}CH_2\text{-}O)_m$ $(1 \leq m \leq 6)$, or a single bond.

**13.** The liquid crystal display device according to any one of claims 1 to 12, wherein, when no voltage is applied, the alignment film controls liquid crystal molecules of the liquid crystal layer so that the liquid crystal molecules are aligned to tilt from the normal direction of a main surface of the alignment film.

**14.** The liquid crystal display device according to any one of claims 1 to 13, wherein the liquid crystal display device includes a plurality of pixels, each of the pixels having not less than two areas with different alignment directions of liquid crystal from one another.

**15.** The liquid crystal display device according to claim 14, wherein the number of the areas is four.

**16.** A method for manufacturing the liquid crystal display device of claim 1, comprising the steps of applying an alignment film material on a main surface of at least one of substrates, and allowing the alignment film material to react to form an alignment film, wherein the alignment film material includes an epoxy compound and one of a polyamic acid and a polyimide having a degree of imidization of less than 100%, and the film forming step includes reacting the epoxy compound with one of the polyamic acid and the polyimide having a degree of imidization of less than 100%.

**17.** Themethodformanufacturingthe liquid crystal display device according to claim 16, further comprising the step of forming an alignment maintaining layer to form a polymer on the alignment film after the film forming step, wherein the alignment maintaining layer forming step includes irradiating a liquid crystal that includes dispersed monomers with light while applying a voltage, to photopolymerize the monomers so that the polymer is formed on the surface of the alignment film.

**18.** The method for manufacturing the liquid crystal display device according to claim 16, further comprising the step of forming an alignment maintaining layer to form a polymer on the alignment film after the film forming step, wherein the alignment maintaining layer forming step includes irradiating a liquid crystal that includes dispersed monomers with light without applying a voltage, to photopolymerize the monomers so that the polymer is formed on the surface of the alignment film.

Fig. 1

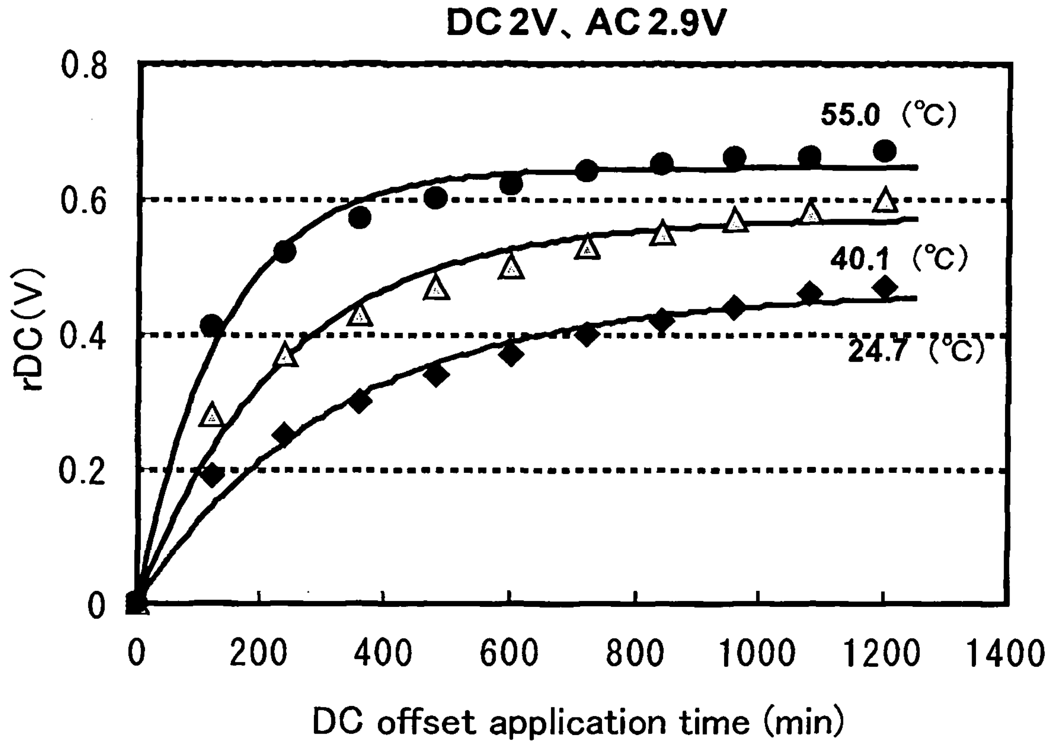
DC 2V、AC 2.9V
0.8
0.6
0.4
0.2
0
rDC(V)
55.0 (℃)
40.1 (℃)
24.7 (℃)
0
200
400
600
800
1000
1200
1400
DC offset application time (min)

Fig. 2

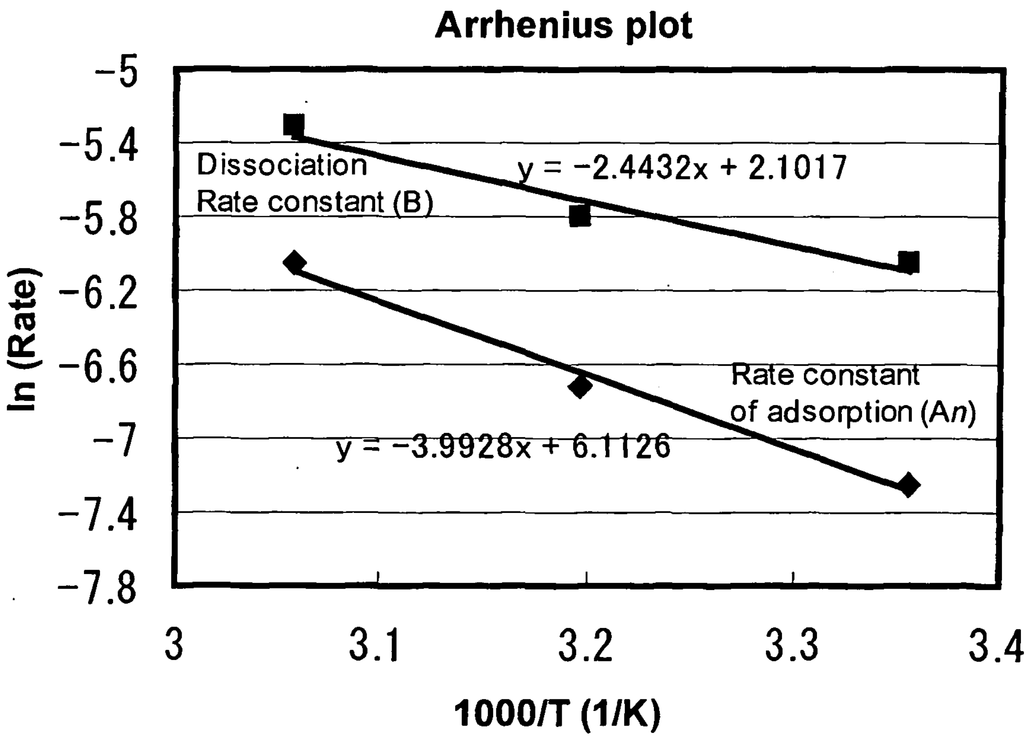
Arrhenius plot
-5
-5.4
-5.8
-6.2
-6.6
-7
-7.4
-7.8
ln (Rate)
Dissociation
Rate constant (B)
y = −2.4432x + 2.1017
Rate constant
of adsorption (An)
y = −3.9928x + 6.1126
3
3.1
3.2
3.3
3.4
1000/T (1/K)

Fig. 3

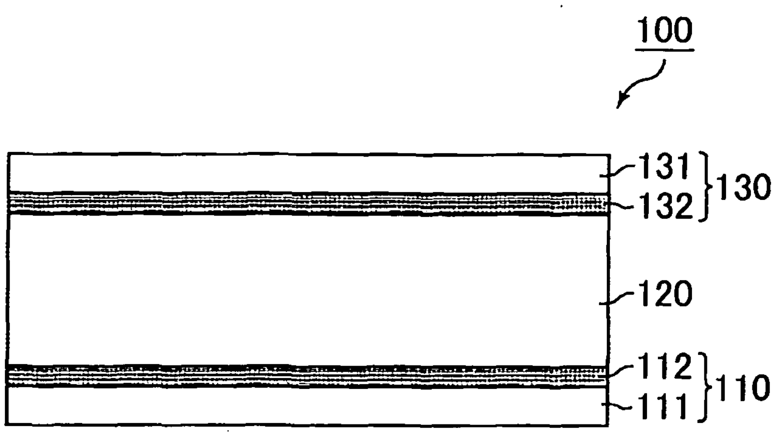


Fig. 4

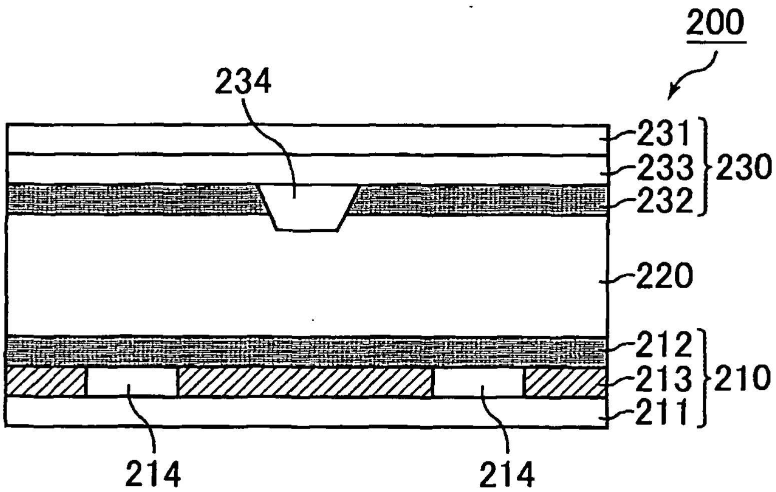


Fig. 5

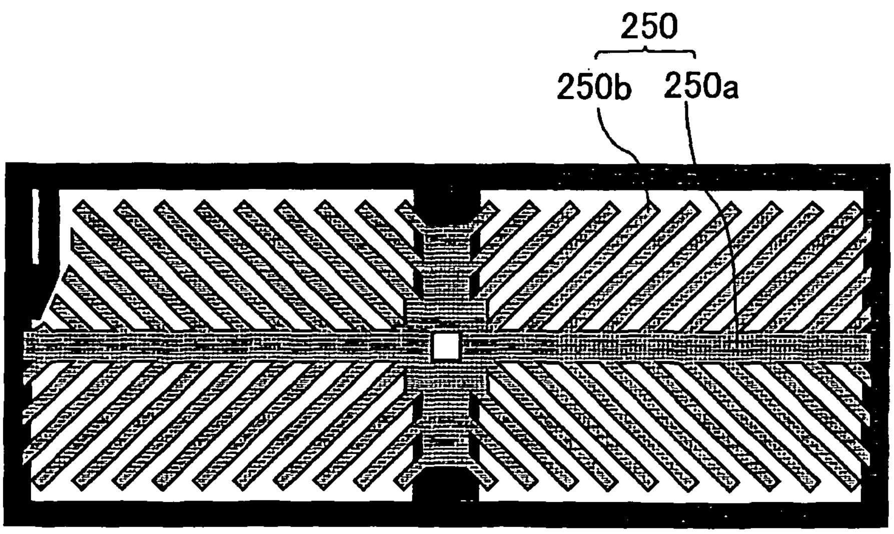

**INTERNATIONAL SEARCH REPORT**

International application No.
PCT/JP2010/060303

A. CLASSIFICATION OF SUBJECT MATTER
*G02F1/1337*(2006.01)i, *C08G59/42*(2006.01)i, *C08G73/10*(2006.01)i

According to International Patent Classification (IPC) or to both national classification and IPC

B. FIELDS SEARCHED

Minimum documentation searched (classification system followed by classification symbols)
G02F1/1337, C08G59/42, C08G73/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2-103019 A (Japan Synthetic Rubber Co., Ltd.),<br>16 April 1990 (16.04.1990),<br>claims; examples 3, 4<br>(Family: none) | 1-3,9<br>4-8,10-15 |
| X<br>A | JP 2005-189270 A (Chi Mei Optoelectronics Corp.),<br>14 July 2005 (14.07.2005),<br>paragraphs [0032] to [0034], [0042]<br>& US 2006/0134348 A1 & KR 10-2005-0065330 A<br>& CN 1637526 A | 1-3,9<br>4-8,10-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 September, 2010 (14.09.10) | 21 September, 2010 (21.09.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/060303

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
the portion concerning (Invention 1) described in the extra sheet, among the inventions in claims 1 - 15

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

INTERNATIONAL SEARCH REPORT

International application No.
PCT/JP2010/060303

Continuation of Box No.III of continuation of first sheet(2)

Examination has been made for unity with respect to the inventions in claims 1 - 18. The matter common to the inventions in those claims is relevant to the point set forth in claim 1.

However, the invention in claim 1 (and the inventions in claims 2, 3) is disclosed in JP 2-103019 A and JP 2005-189270 A.

Namely, the search revealed that the matter common to the inventions in claims 1 - 18 is not novel, since the matter is disclosed in the above-said documents: JP 2-103019 A and JP 2005-189270 A. As a result, the above-said common matter is not a special technical feature in the meaning of the second sentence of PCT Rule 13.2, since said common matter does not make contribution over the prior art.

From the above-said contents, the present application is considered to involve the following seven inventions. Herein, the matter for defining invention which the invention in claim 1 has is referred to as "A", the matter for defining invention which is newly prescribed in claim 3 is referred to as "B", the matter for defining invention which is newly prescribed in claim 4 is referred to as "C", the matter for defining invention which is newly prescribed in claim 5 is referred to as "D", the matter for defining invention which is newly prescribed in claim 6 is referred to as "E", the matter for defining invention which is newly prescribed in claim 13 is referred to as "F", and the matter for defining invention which is newly prescribed in claim 14 is referred to as "G".

(Invention 1) the inventions in claims 1 - 3, the invention in claim 9, and the invention(s) having the following special technical feature among the inventions in claims 4 - 8, 10 - 15

Liquid crystal display device having A, B and C.

(Invention 2) the invention(s) having the following special technical feature among the inventions in claims 4 - 8, 10 - 15

Liquid crystal display device having A and C.

(Invention 3) the invention(s) having the following special technical feature among the inventions in claims 5, 7, 8, 13 - 15

Liquid crystal display device having A and D.

(Invention 4) the invention(s) having the following special technical feature among the inventions in claims 6 - 8, 13 - 15

Liquid crystal display device having A and E.

(Invention 5) the invention(s) having the following special technical feature among the inventions in claims 13 - 15

Liquid crystal display device having A and F.

(Invention 6) the invention(s) having the following special technical feature among the inventions in claims 14, 15

Liquid crystal display device having A and G.

(Invention 7) the inventions in claims 16 - 18

Meanwhile, the invention in claim 9 pertains to the contents disclosed in the above-said documents, and therefore is classified into invention 1.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10338880 A
- JP 2001228481 A
- JP 2009235727 A